# EUROPEAN PATENT SPECIFICATION

(11) **EP 2 942 830 B1**
(45) Date of publication and mention of the grant of the patent: **26.10.2016**
(21) Application number: 14785950.8
(22) Date of filing: 07.03.2014
(51) Int. Cl.: H01M 8/1018, H01M 8/0273, H01M 8/0276

(54) **SOLID POLYMER ELECTROLYTE FUEL CELL**
FESTELEKTROLYT-BRENNSTOFFZELLE
PILE À COMBUSTIBLE À ÉLECTROLYTE SOLIDE À BASE DE POLYMÈRE

(30) Priority: 18.04.2013 JP 2013087662
(43) Date of publication of application: 11.11.2015
(73) Proprietor: Panasonic Intellectual Property Management Co., Ltd., Osaka-shi, Osaka 540-6207 (JP)
(72) Inventor: YOSHIMURA, Mitsuo, Osaka 540-6207 (JP); MORIMOTO, Takashi, Osaka 540-6207 (JP); ISERI, Mitsuhiro, Osaka 540-6207 (JP); YAMAMOTO, Yoko, Osaka 540-6207 (JP)
(74) Representative: Vigand, Philippe
(86) International application number: PCT/JP2014/001279
(87) International publication number: WO 2014/171055

(56) References cited:
- EP-A1- 1 876 666
- WO-A1-2009/072291
- WO-A1-2011/083548
- JP-A- H10 199 551
- JP-A- 2009 021 217
- JP-A- 2010 027 422
- US-A1- 2007 264 557
- US-A1- 2008 305 384
- US-A1- 2009 246 586

## Description

### TECHNICAL FIELD

The present invention relates to a solid polymer electrolyte fuel cell (hereinafter, referred to as PEFC) including an electrode-membrane-frame assembly.

### BACKGROUND ART

The PEFC allows a fuel gas that contains hydrogen and an oxidizing gas such as air that contains oxygen to electrochemically react with each other and simultaneously generate electric power and heat. As a basic constituent element, the PEFC includes a polymer electrolyte membrane that selectively transports hydrogen ions, and an anode electrode and a cathode electrode which are formed on respective surfaces of the polymer electrolyte membrane. These electrodes include a catalyst layer formed on the surface of the polymer electrolyte membrane, and a gas diffusion layer (GDL) disposed out of the catalyst layer. The GDL has gas permeability and electronic conductivity. In this manner, the polymer electrolyte membrane and the electrode are integrally bonded and assembled, and thus an electrolyte membrane-electrode assembly (MEA: Membrane Electrode Assembly) is constructed.

In addition, a frame is assembled on an outer edge of the MEA, and thus an electrode-membrane-frame assembly is constructed. In addition, conductive separators are disposed on both sides of the MEA, respectively, so as to mechanically interpose and fix the MEA therebetween, and so as to electrically connect adjacent MEAs in series. In a portion of the separator which is in contact with the MEA, a gas flow passage is formed. A reaction gas is supplied to each electrode through the gas flow passage and generated water or an excess gas is carried away through the gas flow passage. A structure in which the MEA is sandwiched between a pair of the separators as described above is referred to as a single cell module (single cell).

In addition, each of the separators is provided with a manifold hole at an edge portion thereof so as to supply the reaction gas to the gas flow passage, and the reaction gas is distributed and supplied to each single cell module through the manifold hole. Furthermore, a sealing member (gasket) is disposed between the frame and the separator so as to surround the periphery of an electrode forming portion that is a power generation region of the MEA. The sealing member prevents reaction gas and the like which are supplied to the gas flow passage from leaking to the outside or being mixed.

Meanwhile, as an important problem in the PEFC, an improvement in gas usage efficiency may be exemplified. Examples causing decrease of usage efficiency include gas cross-leakage, gas leakage to the outside, and gas shortcut. The cross-leakage refers to a situation in which the oxidizing gas on a cathode side and the fuel gas on an anode side are not sufficiently separated from each other. Specifically, the cross-leakage occurs when a hole is opened to the MEA, when the fuel gas on the anode side passes through the surface of the MEA, turns around an end of the MEA, and exits to the cathode side, or when the oxidizing gas on the cathode side passes through the surface of the MEA, turns around the end of the MEA, and exits to the anode side. Accordingly, the gas usage efficiency decreases, and thus efficiency (power generation efficiency) of the PEFC decreases and the electrolyte membrane deteriorates.

The gas leakage to the outside refers to a situation in which the sealing member is provided so as to stride over surface unevenness of the frame that is in contact with the sealing member, or a joint on a surface in a configuration which includes a plurality of frame members, and thus sealing properties are not maintained. When gas is leaked to the outside, usage efficiency decreases, and thus the efficiency (power generation efficiency) of the PEFC decreases.

The gas shortcut refers to a situation in which the fuel gas and the oxidizing gas are leaked, and are discharged to the outside with almost no exposure to the MEA. The MEA may be provided with a gap between an inner edge of the gasket and an outer edge of an electrode layer due to a restriction in the manufacturing process or the like. In a case where such a gap exists, the fuel gas and the oxidizing gas are leaked into the gap during operation of the PEFC. As a result, the usage efficiency of the fuel gas and the oxidizing gas decreases, and thus the efficiency (power generation efficiency) of the PEFC decreases.

In addition, when injection molding, which is advantageous to cost reduction, is used during manufacturing of the MEA, a load of excessive heat or pressure is applied. As a result, hole-opening and the like occur, and thus an adverse effect on durability time of the MEA is expected, and a decrease in durability performance may be caused.

To solve these problems, an electrode-membrane-frame assembly of the related art is constructed as a MEA integrated product in which the MEA, a frame that supports the MEA, and an elastic gasket material are combined. Alternatively, these components are integrated by a method such as two-color molding. For example, PTL 1 discloses a structure in which the above-described problems are solved by the above-described configuration, and the load of excessive heat or pressure due to direct injection molding into the MEA is reduced.

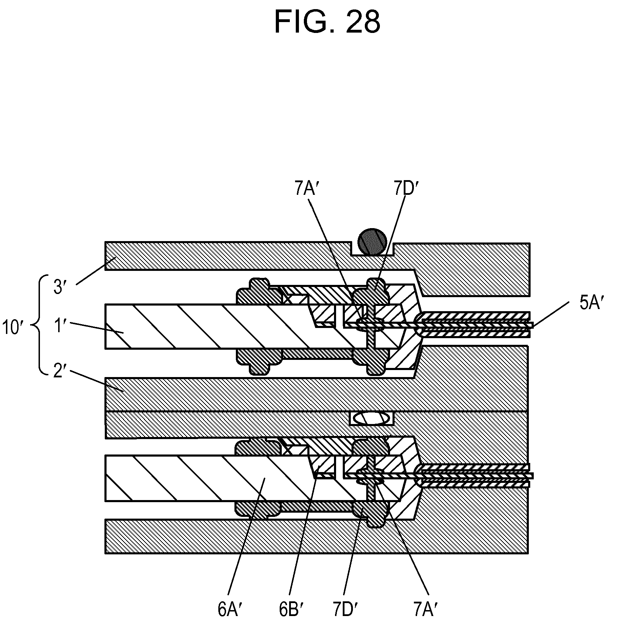

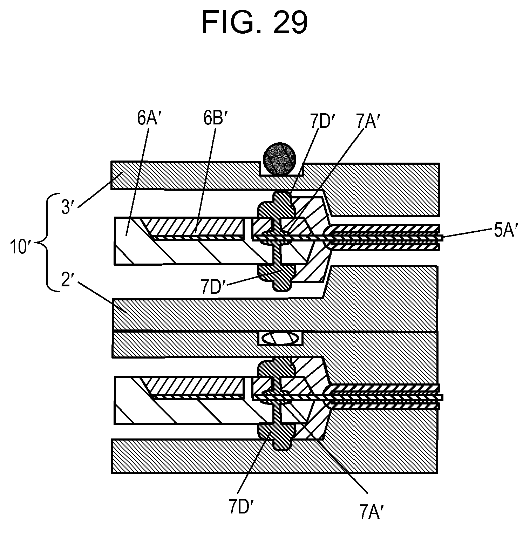

FIGs. 28 and 29 are cross-sectional views illustrating the electrode-membrane-frame assembly of a fuel cell of the related art which is described in PTL 1. In the drawings, respective upper portions are drawn in such a manner that members are slightly separated from each other for clarity.

An assembly disclosed in PTL 1 includes first frame body 6A' and second frame body 6B' which are made of a predetermined resin material, respectively and separately. Membrane 5A' is sandwiched between first frame body 6A' and second frame body 6B' so as to construct MEA integrated product 1'. MEA integrated product 1' is sandwiched between separators 2' and 3' so as to construct single cell 10'. First frame body 6A' is provided with membrane-sealing member 7A' and separator-sealing member 7D'. Membrane-sealing member 7A' is configured to prevent the cross-leakage on a side with which membrane 5A' is in contact, and separator sealing member 7D' is configured to seal a space between first frame body 6A' and separators 2' and 3'.

The size of second frame body 6B' in FIG. 28 is different from that in FIG. 29. In FIG. 28, an outer end of second frame body 6B' is positioned on an inner side of a manifold hole formed in first frame body 6A'. On the other hand, in FIG. 29, the outer end of second frame body 6B' is positioned on an outer side of the manifold hole formed in first frame body 6A', and a manifold hole is also provided in second frame body 6B'. It is assumed that the size of membrane 5A' is the same as or smaller than that of an outer edge of a surface of second frame body 6B' on a first frame body 6A' side which is in contact with membrane 5A' when combining second frame body 6B' with first frame body 6A'. Meanwhile, detailed description of a gas flow passage portion is omitted.

### Citation List

### Patent Literature

PTL1: Japanese Patent Unexamined Publication No. 2009-21217

### SUMMARY OF THE INVENTION

According to an aspect of the invention, there is provided a solid polymer electrolyte fuel cell including a single cell module. The single cell module includes an electrode-membrane-frame assembly, first and second separators, a first opening gasket, and a second opening gasket. The electrode-membrane-frame assembly includes a polymer electrolyte membrane, an electrode portion, a frame body which is disposed at a peripheral edge portion of the polymer electrolyte membrane and holds the electrode portion. Furthermore, the frame body is formed of first to third frame bodies. The electrode portion includes an anode electrode bonded to a first surface of the polymer electrolyte membrane, and a cathode electrode bonded to a second surface that is opposite to the first surface. The first frame body is disposed at a peripheral edge portion of the polymer electrolyte membrane, and is provided with a first opening from which an electrode portion is exposed. The second frame body is disposed on a surface opposite to a surface of the polymer electrolyte membrane with which the first frame body is in contact, and is provided with a second opening which communicates with the first opening. The electrode portion is exposed from the second opening. The second frame body sandwiches the polymer electrolyte membrane together with the first frame body. The third frame body is disposed without contact with the polymer electrolyte membrane and seals a boundary surface between the first frame body and the second frame body out of the polymer electrolyte membrane. In addition, the first frame body has a portion in contact with the first opening gasket and forming a plane free from a joint or a step difference, and the second frame body has a portion in contact with the second opening gasket and forming a plane free from a joint or a step difference.

According to the above-described configuration, a step difference or a material joint does not occur on closed seal lines which seal a fuel gas and an oxidizing gas, respectively, and thus it is possible to reduce a decrease in power generation efficiency due to gas leakage.

### BRIEF DESCRIPTION OF DRAWINGS

FIG. 1 is a partially exploded perspective view illustrating a schematic structure of an electrode-membrane-frame assembly of a solid polymer electrolyte fuel cell according to embodiments of the invention.
FIG. 2 is a front view, which is seen from an anode separator side, of an electrode-membrane-frame assembly of a solid polymer electrolyte fuel cell according to a first embodiment of the invention.
FIG. 3 is a front view, which is seen from a cathode separator side, of the electrode-membrane-frame assembly illustrated in FIG. 2.
FIG. 4 is a partially exploded cross-sectional view, which is taken along arrow line A-A, of the electrode-membrane-frame assembly illustrated in FIG. 2.
FIG. 5 is a partially exploded cross-sectional view, which is taken along arrow line B-B, of the electrode-membrane-frame assembly illustrated in FIG. 2.
FIG. 6 is an exploded perspective view of the electrode-membrane-frame assembly illustrated in FIG. 2 where a gasket is eliminated.
FIG. 7 is a front view of a first frame body constituting the electrode-membrane-frame assembly illustrated in FIG. 2.
FIG. 8 is a front view of a second frame body constituting the electrode-membrane-frame assembly illustrated in FIG. 2.
FIG. 9 is a front view seen from the anode separator side after assembling the first frame body illustrated in FIG. 7, the second frame body illustrated in FIG. 8, and an MEA.
FIG. 10 is a front view seen from the cathode separator side after assembling the first frame body illustrated in FIG. 7, the second frame body illustrated in FIG. 8, and the MEA.
FIG. 11 is a front view, which is seen from the anode separator side, of the first frame body illustrated in FIG. 7, and a gasket disposed on the first frame body.
FIG. 12 is a front view, which is seen from the cathode separator side, of the first frame body illustrated in FIG. 7, and the gasket disposed on the first frame body.
FIG. 13 is a front view, which is seen from the anode separator side, of the second frame body illustrated in FIG. 8, and a gasket disposed on the second frame body.
FIG. 14 is a partial perspective view of the vicinity of a fuel gas manifold according to the first embodiment.
FIG. 15 is a front view, which is seen from an anode separator side, of an electrode-membrane-frame assembly of a solid polymer electrolyte fuel cell according to a second embodiment.
FIG. 16 is a front view, which is seen from a cathode separator side, of the electrode-membrane-frame assembly illustrated in FIG. 15.
FIG. 17 is a partially exploded cross-sectional view, which is taken along arrow line C-C, of the electrode-membrane-frame assembly illustrated in FIG. 15.
FIG. 18 is a partially exploded cross-sectional view, which is taken along arrow line D-D, of the electrode-membrane-frame assembly illustrated in FIG. 15.
FIG. 19 is an exploded perspective view of the electrode-membrane-frame assembly illustrated in FIG. 15 where a gasket is eliminated.
FIG. 20 is a front view of a first frame body constituting the electrode-membrane-frame assembly illustrated in FIG. 15.
FIG. 21 is a front view of a second frame body constituting the electrode-membrane-frame assembly illustrated in FIG. 15.
FIG. 22 is a front view seen from the anode separator side after assembling the first frame body illustrated in FIG. 20, the second frame body illustrated in FIG. 21, and an MEA.
FIG. 23 is a front view seen from the cathode separator side after assembling of the first frame body illustrated in FIG. 20, the second frame body illustrated in FIG. 21, and the MEA.
FIG. 24 is a front view, which is seen from the anode separator side, of the first frame body illustrated in FIG. 20 and a gasket disposed on the first frame body.
FIG. 25 is a front view, which is seen from the cathode separator side, of the first frame body illustrated in FIG. 20, and the gasket disposed on the first frame body.
FIG. 26 is a front view, which is seen from the anode separator side, of the second frame body illustrated in FIG. 21, and a gasket disposed on the second frame body.
FIG. 27 is a partial perspective view of the vicinity of a fuel gas manifold according to the second embodiment.
FIG. 28 is a cross-sectional view of an electrode-membrane-frame assembly of a solid polymer electrolyte fuel cell of the related art.
FIG. 29 is a cross-sectional view of the electrode-membrane-frame assembly of the solid polymer electrolyte fuel cell of the related art.

### DESCRIPTION OF EMBODIMENTS

Prior to description of embodiments of the invention, description will be given of problems in a solid polymer electrolyte fuel cell of the related art. In a configuration illustrated in FIG. 28, an outer end of second frame body 6B' is positioned on an inner side of a manifold hole formed in first frame body 6A', and a gap occurs between first frame body 6A' and second frame body 6B'. Therefore, gaskets are disposed in a duplicate manner with the gap therebetween, and the joint between the gaskets is covered with a cover made of the same material as that of the gaskets. However, a flow passage portion connected to a manifold hole from a power generation unit is not illustrated. In this configuration, ta gas may flow into a space between the gaskets disposed in a duplicate manner, and thus shortcut may occur.

In addition, in a case where gaskets made of a material such as a fluorine rubber that is difficult to be integrated with a frame body are used in an inserted manner, or in a case where a separator and the gaskets are used in an integrated structure, a gap also occurs between first frame body 6A' and second frame body 6B', and thus gas leakage may occur. In addition, there is also a problem in that the gaskets are duplicated, and thus a fastening pressure increases.

In addition, in a configuration illustrated in FIG. 29, the outer end of second frame body 6B' is positioned out of the manifold hole formed in first frame body 6A'. Accordingly, even when a gap occurs between first frame body 6A' and second frame body 6B', it does not affect gas leakage. However, expensive polymer electrolyte membrane (hereinafter, referred to as a membrane) 5A' and second frame body 6B' are approximately the same size. Accordingly, an end of membrane 5A' is exposed to external air, and thus membrane 5A' deteriorates.

In addition, in any of the configurations illustrated in FIG. 28 and FIG. 29, a seal made of an elastic body is necessary between the frame body and the polymer electrolyte membrane, and thus a structure becomes complicated.

Hereinafter, description will be given of a solid polymer electrolyte fuel cell, which has a simple structure with which the above-described problem is solved and in which gas cross-leakage and gas leakage to the outside do not occur, according to embodiments of the invention with reference to the accompanying drawings.

### (First Exemplary Embodiment)

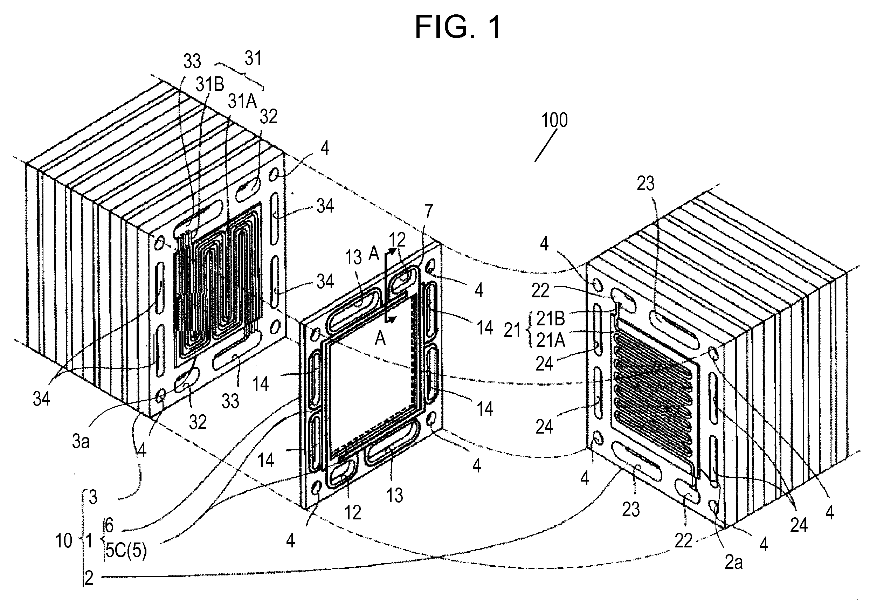

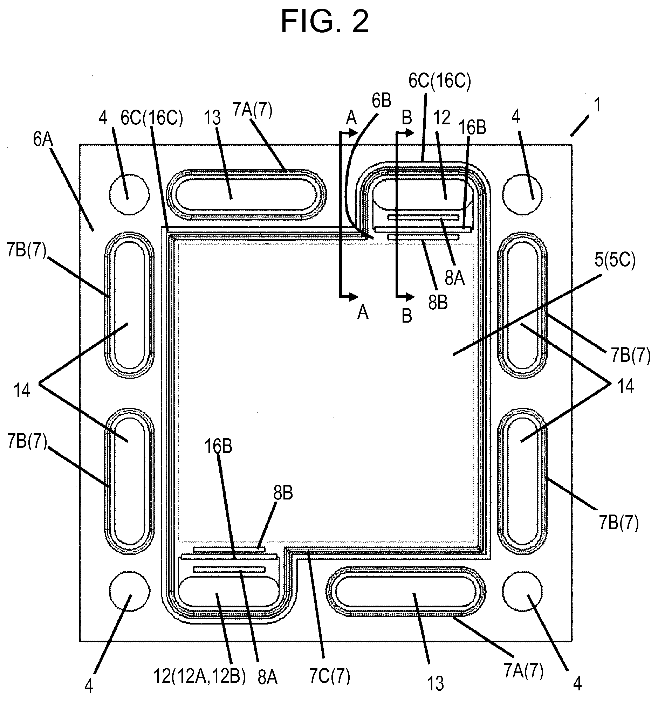

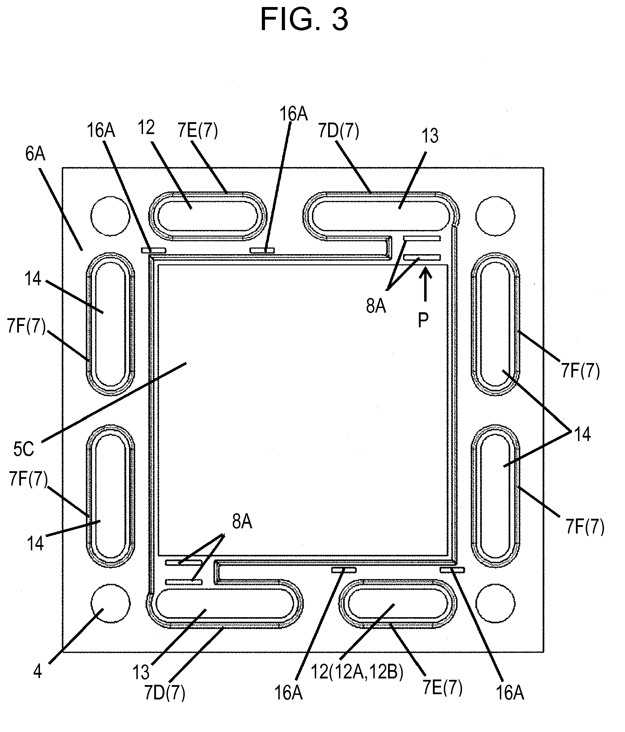

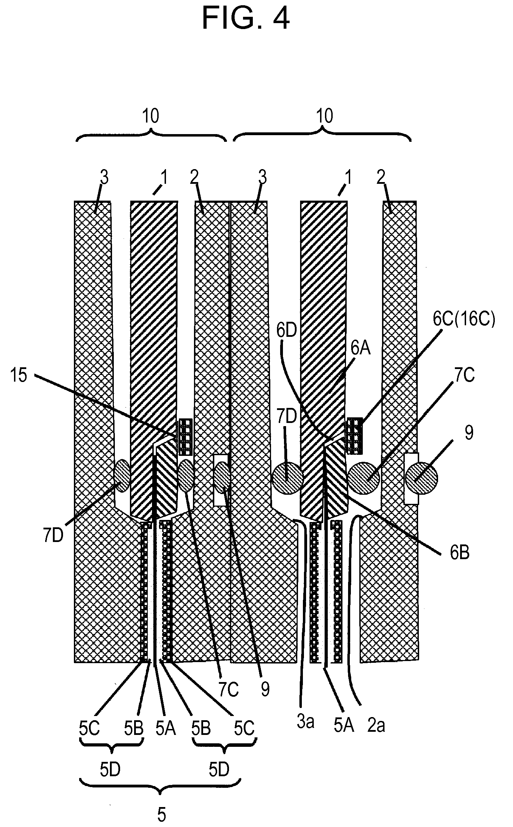

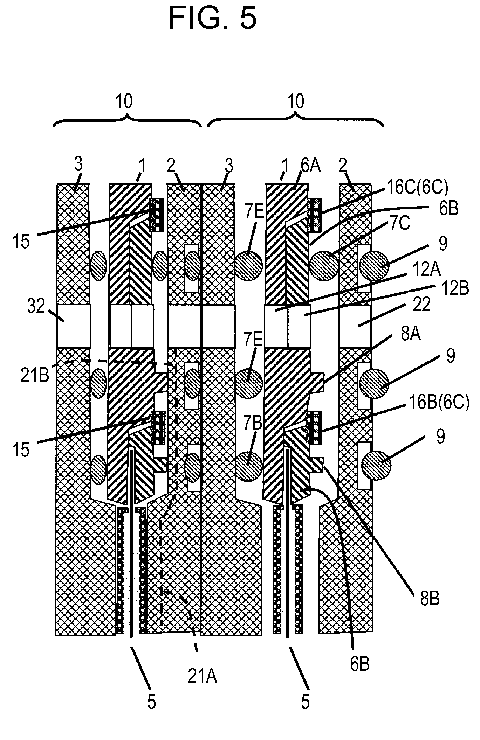

FIG. 1 is a partially exploded perspective view schematically illustrating a structure of solid polymer electrolyte fuel cell (hereinafter, referred to as a PEFC) 100 according to a first embodiment of the invention. FIG. 2 is a front view, which is seen from anode separator (hereinafter, referred to as a separator) 2, of electrode-membrane-frame assembly (hereinafter, referred to as an assembly) 1 according to the first embodiment, and FIG. 3 is a front view, which is seen from cathode separator (hereinafter, referred to as a separator) 3, of assembly 1. FIG. 4 is a partial cross-sectional view taken along arrow line A-A in FIG. 2, and FIG. 5 is a cross-sectional view taken along arrow line B-B in FIG. 2. In FIG. 4 and FIG. 5, a right half is illustrated in a slightly exploded manner.

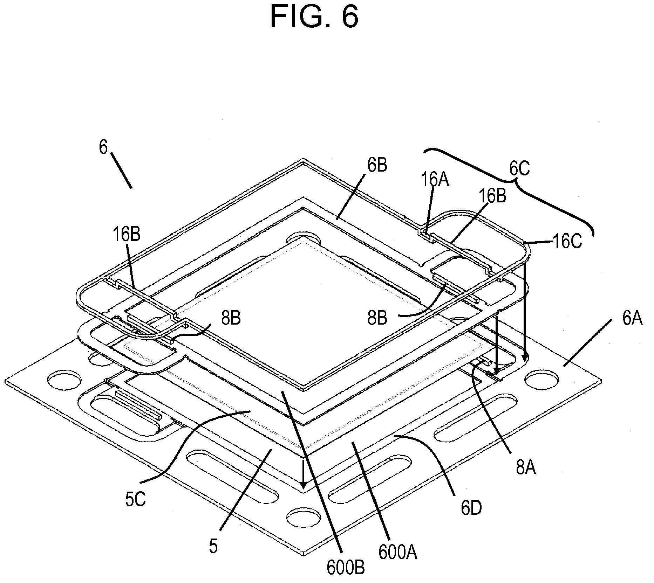

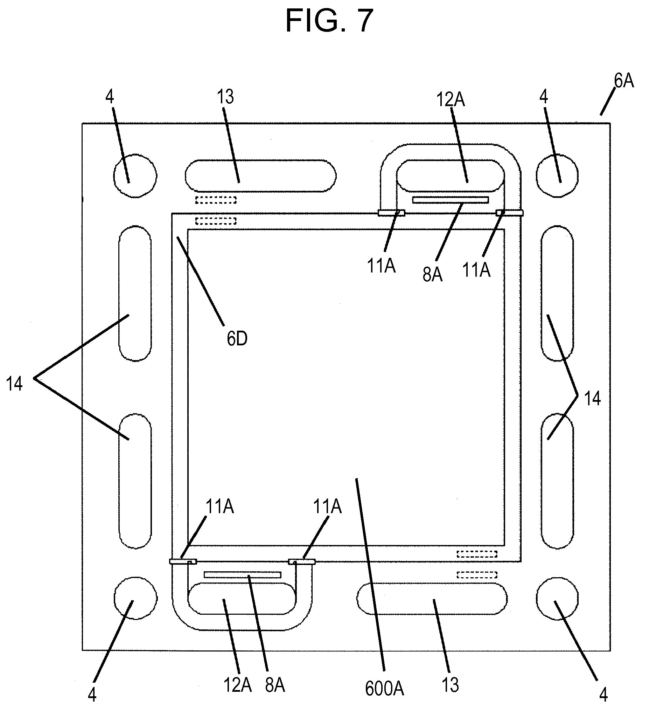

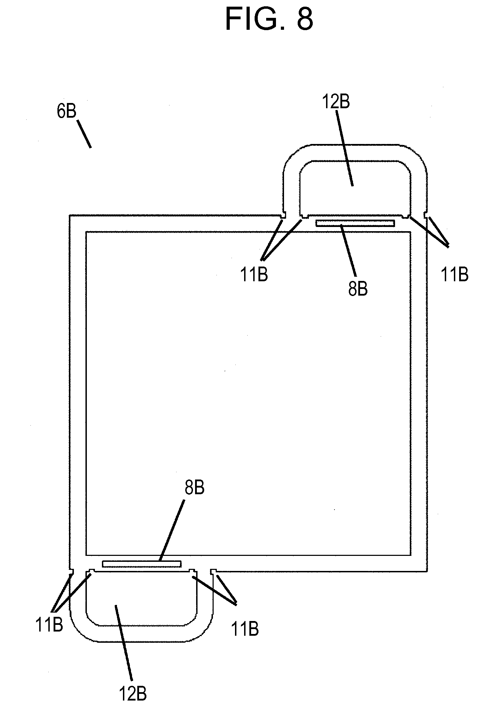

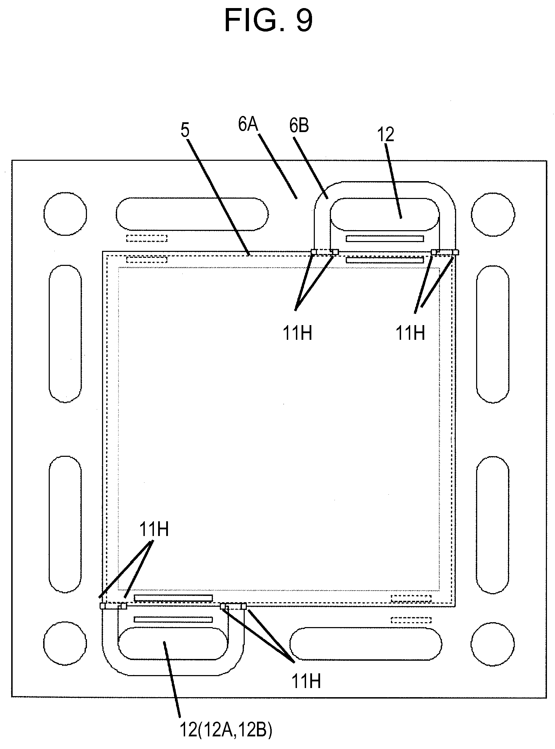

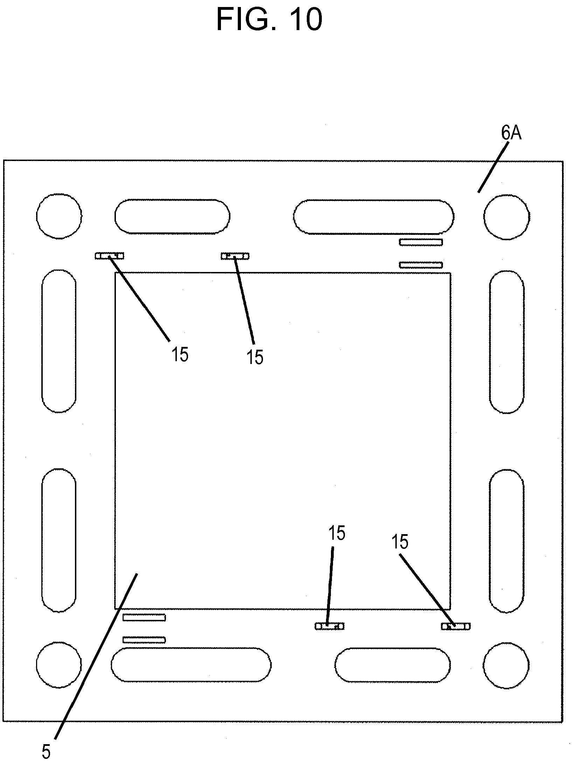

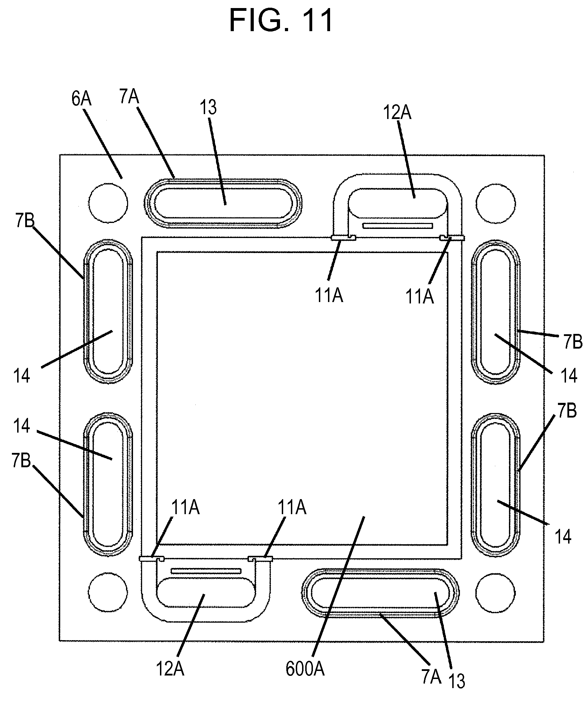

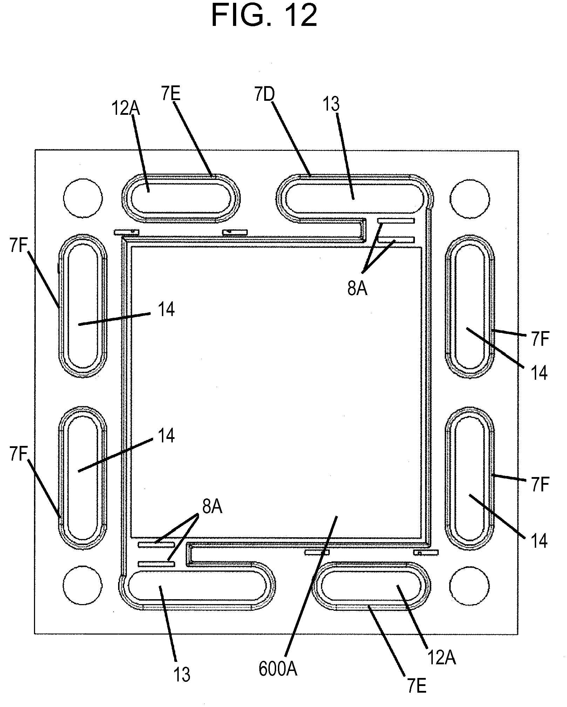

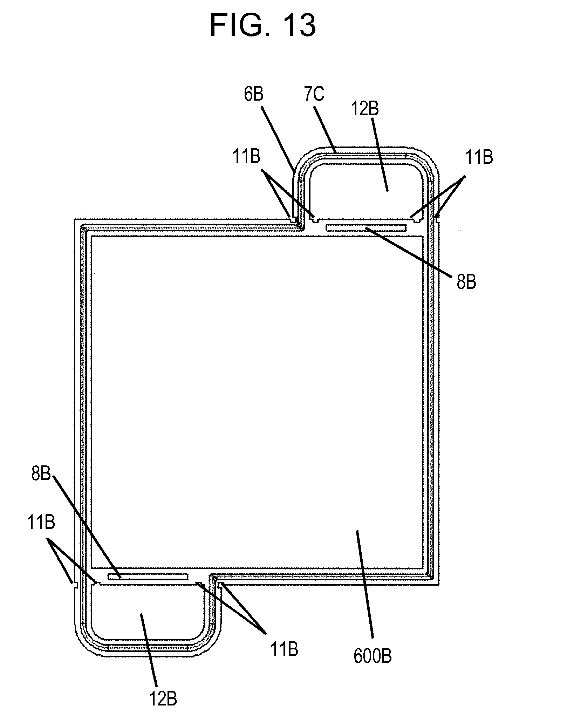

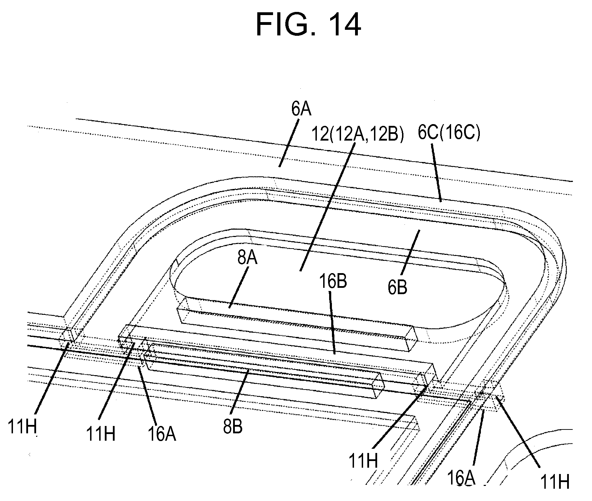

In addition, following drawings are of partial members in assembly 1. Specifically, FIG. 6 is an exploded perspective view, which is seen from separator 2, of assembly 1 where gaskets are eliminated. FIG. 6 illustrates membrane-electrode assembly (MEA) 5, first frame body 6A, second frame body 6B, and third frame body 6C. As illustrated in FIG. 4, MEA 5 is an assembly of electrode layers 5D and polymer electrolyte membrane (hereinafter, referred to as a membrane) 5A. FIG. 7 is a front view of first frame body 6A, and FIG. 8 is a front view of second frame body 6B. FIG. 9 is a front view seen from separator 2 in a state in which MEA 5, first frame body 6A, second frame body 6B are layered on each other, and FIG. 10 is a front view seen from separator 3. FIG. 11 is a front view, which is seen from separator 2, of first frame body 6A where first gasket 7A and second gasket 7B are disposed. FIG. 12 is a front view, which is seen from separator 3, of first frame body 6A where first opening gasket 7D, third gasket 7E, and fourth gasket 7F are disposed. FIG. 13 is a front view, which is seen from separator 2 side, of second frame body 6B where second opening gasket 7C is disposed. FIG. 14 is a perspective view of the vicinity of fuel gas manifold hole 12. Fuel gas manifold hole 12 is formed by communicating first gas manifold hole 12A of first frame body 6A illustrated in FIG. 7 and third gas manifold hole 12B of second frame body 6B illustrated in FIG. 8 with each other.

Meanwhile, first gasket 7A to fourth gasket 7F, first opening gasket 7D, and second opening gasket 7C may be collectively referred to as gasket 7. In addition, in the following description, first gasket 7A to fourth gasket 7F, first opening gasket 7D, and second opening gasket 7C are simply referred to as gaskets 7A to 7F.

As illustrated in FIG. 1, PEFC 100 is constructed by laminating a plurality of cells (single cell modules) 10. Although not illustrated, a current collection plate, an insulating plate, and an end plate are attached to each of outermost cells which are positioned on both end sides of laminated cells 10, and cells 10 are fastened from both sides thereof with fastening bolts (not illustrated) which pass through respective bolt holes 4 and nuts (not illustrated).

In this embodiment, 60 cells 10 are laminated, and are fastened with the bolts that passes through respective bolt holes 4 and the nuts at a fastening force of 10 kN. In this embodiment, description will be given of a structure in which cells 10 are laminated as an example. However, even when the PEFC is constituted by one cell, the following specific configuration of this embodiment is applicable to such a PEFC.

Each of cells 10 is formed of assembly 1, conductive separators 2 and 3 sandwiching assembly 1, and gaskets 7A to 7F. More specifically, as illustrated in FIG. 4 and FIG. 5, assembly 1 includes MEA 5 and frame body 6. Cell 10 is constructed by sandwiching both surfaces of frame body 6 which is positioned at the peripheral edge portion of assembly 1 with separators 2 and 3 through gaskets 7A to 7F disposed on the both surfaces,.

As illustrated in FIG. 4, MEA 5 includes membrane 5A and a pair of electrode layers 5D. Membrane 5A has a first surface and a second surface opposite to the first surface, and electrode layer 5D as an anode electrode layer formed on the first surface and electrode layer 5D as a cathode electrode layer formed on the second surface constitute an electrode portion. Electrode layer 5D includes catalyst layer 5B formed on membrane 5A, and diffusion layer 5C covering catalyst layer 5B. Frame body 6 is formed of first frame body 6A, second frame body 6B, and third frame body 6C.

In this configuration, diffusion layers 5C of MEA 5 are in contact with surfaces of separators 2 and 3, respectively. A fuel gas flow passage is defined by diffusion layer contact portion 21A of fuel gas flow passage groove (hereinafter, referred to as a groove) 21 illustrated in FIG. 1 of separator 2, and diffusion layers 5C. An oxidizing gas flow passage is defined by diffusion layer contact portion 31A of oxidizing gas flow passage groove (hereinafter, referred to as a groove) 31 illustrated in FIG. 1 of separator 3, and diffusion layers 5C.

According to the above-mentioned structure, a fuel gas flows through diffusion layer contact portion 21A, comes into contact with diffusion layer 5C that is in contact with separator 2, and causes electrochemical reaction in PEFC 100. In addition, in laminated cells 10, adjacent MEAs 5 are electrically connected in series or in parallel.

Frame body 6 is positioned at the peripheral edge portion of separators 2 and 3, and assembly 1, and is provided with fuel gas manifold holes (hereinafter, referred to as manifold holes) 12, 22, and 32, and oxidizing gas manifold holes (hereinafter, referred to as manifold holes) 13, 23 and 33 through which the fuel gas and the oxidizing gas flow, respectively. In a state where cells 10 are laminated, the through-holes are communicated to form the fuel gas manifold and the oxidizing gas manifold.

As described above, separator 2 is provided with groove 21 so as to connect two manifold holes 22 in an inner main surface thereof. Separator 3 is provided with Groove 31 so as to connect two manifold holes 33 in an inner main surface thereof. That is, in this configuration, the oxidizing gas and the fuel gas diverge into grooves 21 and 31, respectively, from manifolds on one side, that is, manifolds on a supply side, and flow to manifolds on the other side, that is, manifolds on a discharge side.

Groove 21 includes diffusion layer contact portion 21A and a pair of connection portions 21B. As described above, in a state where cells 10 are assembled, diffusion layer contact portion 21A is formed in a surface portion in contact with diffusion layer 5C. Connection portion 21B is a flow passage groove for connection. Connection portion 21B is formed in such a manner that a portion in contact with diffusion layer 5C and a portion facing the periphery of diffusion layer 5C are connected to each other.

Similarly, groove 31 includes diffusion layer contact portion 31A and a pair of connection portions 31B. As described above, diffusion layer contact portion 31A is formed at a surface portion t in contact with diffusion layer 5C in a state where cells 10 are assembled. Connection portion 31B is a flow passage groove for connection. Connection portion 31B is formed to connect a portion in contact with diffusion layer 5C and a portion facing the periphery of diffusion layer 5C. Connection portions 21B and 31B are formed so as to connect the pair of manifold holes 22 and 33 and connection layer contact portions 21A and 31A, respectively.

In this configuration, the oxidizing gas and the fuel gas flow in from manifold hole 22 and manifold hole 33 on a supply side after diverging into connection portions 21B and 31B, respectively. Then, in each of diffusion layer contact portions 21A and 31A, each of the oxidizing gas and the fuel gas comes into contact with each diffusion layer 5C, and causes an electrochemical reaction. A surplus gas and a reaction product component are discharged to manifold hole 22 and manifold hole 33 on a discharge side through connection portions 21B and 31B which are connected to manifold hole 22 and manifold hole 33 on a discharge side, respectively.

Gaskets 7A to 7E are disposed on both of the main surfaces of frame body 6 of assembly 1. Gaskets 7A, 7C, 7D, and 7E are disposed in order that the oxidizing gas and the fuel gas do not flow out from grooves 21 and 31. That is, gaskets 7A, 7C, 7D, and 7E are disposed so as to surround one of the periphery of manifold hole 12, the periphery of manifold hole 13, and the periphery of first opening 600A, respectively.

Specifically, as illustrated in FIG. 2 and FIG. 11, on a surface in contact with first separator (separator 2), gasket 7A is disposed at the periphery of manifold hole 13. As illustrated in FIG. 2 and FIG. 13, gasket 7C is disposed on second frame body 6B at the periphery of second opening 600B and manifold hole 12. That is, gasket 7C is disposed so as to surround manifold hole 12 and MEA 5 integrally. In a state where cells 10 are assembled, no gasket is disposed at a position in contact with connection portion 21B of groove 21.

On the other hand, on a surface in contact with second separator (separator 3), as illustrated in FIG. 3 and FIG. 12, gasket 7D is disposed at the periphery of manifold hole 13 and first opening 600A. Gasket 7E is disposed at the periphery of manifold hole 12. That is, gasket 7D is disposed so as to surround manifold hole 13 and MEA 5 integrally. In a state where cells 10 are assembled, no gasket is disposed at position P that is in contact with connection portion 31B of groove 31.

The fuel gas flows through a space between manifold hole 22 and MEA 5, and the oxidizing gas flows through a space between manifold hole 33 and MEA 5. Gaskets 7A, 7C, 7D, and 7E prevent the fuel gas and the oxidizing gas from being leaked to the outside of groove 21 and groove 31 while not blocking the flow of the fuel gas and the oxidizing gas. Meanwhile, FIG. 1 illustrates a schematic configuration of gaskets 7, and a schematic configuration of zigzag structures of grooves 21 and 31 in separators 2 and 3.

In PEFC 100 according to this embodiment, description has been given of a case where respective manifold holes are formed by through-holes provided in separators 2 and 3, and frame body 6. Instead of this case, so-called external manifolds may be formed, that is, the manifolds may be formed out of separators 2 and 3. That is, respective manifold holes are not essential. However, from the viewpoints of compactification of PEFC 100, and simplicity of configuration in an external shape thereof, it is preferable that the respective manifold holes are formed by the through-holes provided in separators 2 and 3, and frame body 6.

Separators 2 and 3 and the peripheral edge portions (frame body 6) of assembly 1 are provided with fuel gas manifold holes 12, 22, and 32, and oxidizing gas manifold holes 13, 23, and 33, respectively. In addition, separators 2 and 3 and frame body 6 is provided with water manifold holes 14, 24, and 34 which respectively form two pairs of manifolds through which cooling water flows, respectively. According to this structure, in a state where cells 10 are laminated, these manifold holes respectively communicate with each other and form two pairs of water manifolds. In the drawing, four of each of water manifold holes 14, 24, and 34 are provided, and the number is not limited thereto.

As illustrated in FIG. 2 and FIG. 11, on a surface in contact with separator 2, gasket 7B is disposed at the periphery of water manifold hole 14. On the other hand, as illustrated in FIG. 3 and FIG. 12, on a surface in contact with separator 3, gasket 7F is disposed at the periphery of water manifold hole 14.

Separators 2 and 3 have a flat plate shape. In separators 2 and 3, a surface (inner surface) in contact with assembly 1 is formed in accordance with the shape of assembly 1. Specifically, step differences 2a and 3a are formed in such a manner that the central portion of a surface in contact with assembly 1 protrudes in a trapezoidal shape in accordance with a step difference that occurs due to a difference between the thickness of frame body 6 and the thickness of MEA 5. That is, the thickness of frame body 6 is larger than the total thickness of membrane 5A, catalyst layer 5B, and diffusion layer 5C, and thus the step difference occurs. Separators 2 and 3 have step differences 2a and 3a in a thickness direction in accordance with the shape of the step difference. However, separators 2 and 3, and assembly 1 do not completely fit with each other, and a gap is left as shown in a left side in FIG. 4 and FIG. 5. Gasket 7 is sandwiched in the gap.

Separators 2 and 3 are made of glassy carbon (thickness: 3 mm) manufactured by Tokai Carbon Co., Ltd, for example.. In separators 2 and 3, manifold holes 22, 23, 32, 33, and 34, and bolt holes 4 are formed to pass through separators 2 and 3 in a thickness direction thereof. Separators 2 and 3 are provided with grooves 21 and 31 in the inner surfaces thereof, respectively, and water flow passage grooves (not illustrated) in rear surfaces thereof, respectively. Manifold holes 22, 23, 32, and 33, water manifold holes 24 and 34, bolt holes 4, grooves 21 and 31, and the like are formed by a cutting process or a molding process.

The water flow passage groove is formed to connect two pairs of water manifold holes 24 and 34. That is, according to this configuration, water diverges to water flow passage grooves at a manifold hole on one side (on a supply side), and flows to a manifold hole on the other side (on a water discharge side). According to this structure, it is possible to maintain cell 10 at a predetermined temperature suitable for an electrochemical reaction due to heat transfer capability of water. Similar to manifold holes 13, 23, and 33 and manifold holes 12, 22, and 32, a supply and discharge passage for cooling may be formed in an external manifold structure without forming water manifold holes 14, 24, and 34 in the peripheral edge portion of separators 2 and 3, and assembly 1. Furthermore, cells 10 may be laminated by inserting a cooling unit through which cooling water circulates between adjacent cells without forming the water flow passage groove in the rear surface of each of separators 2 and 3.

Typical sealing member 9 such as a squeezed packing made of a heat-resistant material is disposed on the rear surface of each of separators 2 and 3 at the periphery of various manifold holes. Thanks to sealing members 9, a fuel gas, an oxidizing gas, and water are prevented from flowing out from the connection portion of manifold holes 22, 23, 32, and 33, or water manifold holes 24 and 34 between adjacent cells 10, respectively.

Next, assembly 1 will be described. As described above, assembly 1 includes MEA 5 and frame body 6. Frame body 6 is formed of first frame body 6A, second frame body 6B, and third frame body 6C.

First, MEA 5 will be briefly described with reference to FIG. 4 and FIG. 5. MEA 5 includes membrane 5A that selectively transports hydrogen ions, and a pair of electrode layers 5D (electrode layers of an anode and a cathode) formed on both surfaces of membrane 5A. Typically, each of electrode layers 5D contains a carbon powder having a supported platinum catalyst thereon, as a main component. Electrode layer 5D includes a catalyst layer 5B formed on a surface of membrane 5A, and diffusion layer 5C formed on an outer surface of catalyst layer 5B and having gas permeability and conductivity. Alternatively, catalyst layer 5B may have a two-layer structure (not illustrated) of a water-repellent carbon layer and a platinum carbon layer.

Next, frame body 6 and gasket 7 will be described. As illustrated in FIG. 4 and FIG. 5, frame body 6 is formed of first frame body 6A, second frame body 6B, and third frame body 6C. First frame body 6A, second frame body 6B, and third frame body 6C have shapes illustrated in FIG. 7, FIG. 8, and FIG. 6, respectively. In MEA 5, membrane 5A is larger than catalyst layers 5B and diffusion layers 5C which are formed on the both surfaces of membrane 5A. Accordingly, only the peripheral edge portion of membrane 5A protrudes toward an outer side and is exposed. In addition, the peripheral edge portion of membrane 5A, which protrudes and is exposed, is disposed between first frame body 6A and second frame body 6B, and is sandwiched by first frame body 6A and second frame body 6B. According to this configuration, MEA 5 is held by frame body 6.

In addition, third frame body 6C is used for integrating first frame body 6A and second frame body 6B. That is, third frame body 6C is welded to first frame body 6A and second frame body 6B at welding portion 15 so as to stride over a joint formed by fitting first frame body 6A with second frame body 6B. According to this structure, first frame body 6A, second frame body 6B, and third frame body 6C are mechanically integrated, and thus membrane 5A is held.

First frame body 6A is formed in advance by injection-molding a thermoplastic resin material. Here, description will be given of a relationship between first frame body 6A and gaskets 7A, 7B, 7E, and 7F. FIG. 11 and FIG. 12 illustrate a state in which gaskets 7A, 7B, 7E, and 7F which come into contact therewith are laid on first frame body 6A. In first frame body 6A, surfaces, which come into contact with these gaskets, are flush with each other, and are free from a joint or a step difference. As can be seen from FIG. 11, on a surface of first frame body 6A which is seen from an anode side (from separator 2), a gasket is not disposed at a portion that surrounds first gas manifold hole 12A and MEA 5. On the other hand, as can be seen from FIG. 12, on a surface of first frame body 6A which is seen from a cathode side (from separator 3), gasket 7D is also disposed at a portion that surrounds manifold hole 13 and MEA 5.

In addition, second frame body 6B is also formed in advance by injection-molding a thermoplastic resin material. FIG. 13 illustrates a state in which gasket 7C that comes into contact therewith are laid on second frame body 6B. In second frame body 6B, a surface, which comes into contact with gasket 7C, is a flush surface, and is free from a joint or a step difference. When assembling second frame body 6B and first frame body 6A together, third gas manifold hole 12B communicates with first gas manifold hole 12A to form manifold hole 12, and second opening 600B communicates with first opening 600A. MEA 5 is disposed at a portion where first opening 600A and second opening 600B communicate with each other. Gasket 7C is disposed to surround manifold hole 12 and MEA 5.

In addition, as will be described later, unlike first frame body 6A and second frame body 6B, a shape of third frame body 6C is not formed in advance, and is formed through molding in combination of first frame body 6A, second frame body 6B, and the like, and a mold.

Frame body 6 (first frame body 6A, second frame body 6B, and third frame body 6C) is made of a thermoplastic resin. The thermoplastic resin is chemically clean and stable at a temperature equal to or lower than an operational temperature of PEFC 100, and has an appropriate elastic modulus, and a relatively high load deflection temperature. For example, in a case where the width of grooves 21 and 31 of separators 2 and 3 is approximately 1 mm to 2 mm, and the thickness of frame body 6 is approximately 1 mm or less, it is preferable that a compressive elastic modulus of frame body 6 is at least 2000 MPa. The elastic modulus is a compressive elastic modulus that is measured according to a compressive elastic modulus measurement method specified in JIS-K7181 (in conformity to International Standard ASTM695).

In addition, typically, an operational temperature of PEFC 100 is 90°C or lower, and thus it is preferable that the load deflection temperature of frame body 6 is 120°C or higher. It is preferable that frame body 6 is made of a material which has a great mechanical strength and high heat resistance. For example, a material of a so-called super-engineering plastic grade is appropriate, and examples thereof include modified polyphenylene ether (PPE), polyphenylene sulfide (PPS), polyetheretherketone (PEEK), a crystalline polymer (LCP), polyether nitrile (PEN). These materials have an elastic modulus of several thousands MPa to several tens of thousands MPa, and a load deflection temperature of 120°C or higher, thus these materials are preferable. Even in a resin material that is generally used, for example, glass filler-filled polypropylene (GFPP) and the like are not suitable because a glass filler may be stuck into membrane 5A. In this embodiment, modified PPE of a thermoplastic resin (Zyron 500H, manufactured by Asahi-kasei chemicals Corporation) is used.

As illustrated in FIG. 7, FIG. 4, and FIG. 5, in first frame body 6A, step portion 6D is formed at an inner edge portion of a surface that faces separators 2. As illustrated in FIG. 8, FIG. 4, and FIG. 5, in second frame body 6B, a surface that faces separator 3 is formed in a shape that is fitted into a shape of step portion 6D. In the peripheral edge portion of MEA 5, the peripheral edge portion of membrane 5A in an exposed state is disposed on step portion 6D of first frame body 6A. In addition, second frame body 6B is fitted on membrane 5A so as to be sandwiched between step portion 6D and second frame body 6B. Meanwhile, as illustrated in FIG. 5, rib 8A is formed on a surface of first frame body 6A which faces separator 2. Rib 8A is formed at the corresponding position as that of gasket 7E in contact with first frame body 6A on a side opposite to the surface that faces separator 2. The height of rib 8A is set in such a manner that rib 8A comes into contact with a surface of separator 2 when gasket 7C is compressed.

Meanwhile, gasket 7 may or may not be integrated with first frame body 6A and second frame body 6B. In addition, gasket 7 may or may not be integrated with separators 2 and 3.

Gasket 7 is formed as an elastic body, and is deformed when assembly 1 is disposed between a pair of separators 2 and 3 and is compressed. Specifically, gasket 7 is formed of a rubber such as a fluorine rubber, EPDM, and AEM as an elastic body, a thermoplastic resin, or a thermoplastic elastomer. Gasket 7 is chemically stable under operational conditions of PEFC 100, and particularly does not cause hydrolysis and the like. Accordingly, gasket 7 has heat and water resistance, and resistance against acid derived from polymer electrolyte membrane. For example, it is preferable that a compressive elastic modulus of gasket 7 is 200 MPa or lower. In this embodiment, the fluorine rubber is used so as to secure satisfactory sealing properties at a fastening load of PEFC 100.

As described above, groove 31 of separator 3, which is configured to supply the oxidizing gas to a power generation region, is disposed on a surface of catalyst layer 5B on a cathode side of MEA 5. Groove 31 supplies the oxidizing gas to the power generation region of MEA 5. The power generation region of MEA 5 is positioned at first opening 600A. Manifold hole 13 on a supply side includes a gas supply portion which faces groove 31. Manifold hole 13 on a discharge side includes a gas discharge portion that faces groove 31. On a surface of first frame body 6A which faces separator 3, gasket 7E surrounds an outer side of manifold hole 12, and gasket 7F surrounds an outer side of manifold hole 14. Gasket 7D surrounds an outer side of first opening 600A that is the power generation region, and two manifold holes 13 without divergence between an area in contact with gaskets 7E and 7F, and the power generation region. An area in contact with gasket 7D is formed of the same material and the same plane without a joint or a step difference.

On the other hand, groove 21 of separator 2 which is configured to supply the fuel gas to the power generation region, is disposed on a surface of catalyst layer 5B on an anode side of MEA 5. Groove 21 supplies the fuel gas to the power generation region of MEA 5. Manifold hole 12 on a supply side includes a gas supply portion that faces groove 21. Manifold hole 12 on a discharge side includes a gas discharge portion that faces groove 21. On a surface of second frame body 6B which faces separator 2, gasket 7C surrounds an outer side of second opening 600B that is a power generation region, and two manifold holes 12 without divergence. An area in contact with gasket 7C is formed of the same material and the same plane without a joint or a step difference. Second frame body 6B is larger than an external size of MEA 5 and is smaller than first frame body 6A. An oxidizing gas manifold hole and a water manifold hole are not provided in second frame body 6B.

First frame body 6A and second frame body 6B, which are configured as described above, are fitted to each other, and third frame body 6C is provided to cover a joint of a fitting portion thereof. According to this configuration, the peripheral edge portion of MEA 5 is integrated with frame body 6 without being exposed to the outside. It is preferable that third frame body 6C is integrated through injection molding. Details thereof will be described later.

In addition, in a surface of first frame body 6A which faces separator 3, it is more preferable that an area in contact with gaskets 7E and 7F is formed of the same material and the same plane without a joint or a step difference. In addition, in a surface of first frame body 6A which faces separator 2, it is more preferable that an area in contact with gaskets 7A and 7B is also formed of the same material and the same plane without a joint or a step difference. According to this configuration, a possibility of leakage of the fuel gas, the oxidizing gas, and the water from respective manifolds is significantly reduced.

Next, a structure focused to manifold hole 12 and the vicinity thereof will be described in detail with reference to FIG. 2, and FIG. 5 to FIG. 9.

As illustrated in FIG. 2, first frame body 6A and second frame body 6B sandwich an outer edge of MEA 5 therebetween. For still higher integration in this structure, as illustrated in FIG. 5, frame portion 16C and second connection portion 16B of third frame body 6C block a joint between first frame body 6A and second frame body 6B.

In addition, ribs 8A and 8B receive reaction forces of gaskets 7B, 7E, and 7F, which are positioned between separator 3 and assembly 1, on a surface that faces separator 2. According to this configuration, rib 8A and 8B prevent first frame body 6A and second frame body 6B from being deformed. As a result, it is possible to prevent the fuel gas from leaking toward a cathode surface side along a surface of MEA 5. Meanwhile, frame portion 16C and second connection portion 16B look like individual bodies in FIG. 2, but as illustrated in FIG. 6, frame portion 16C and second connection portion 16B constitute third frame body 6C that is an integral member.

Eight holes 11H illustrated in FIG. 9 are formed by combining four holes 11A of first frame body 6A which are illustrated in FIG. 7, and eight recesses 11B of second frame body 6B which are illustrated in FIG. 8. Frame portion 16C passes through holes 11H illustrated in FIG. 9, and is connected to second connection portion 16B illustrated in FIG. 5 through first connection portion 16A illustrated in FIG. 3. First connection portion 16A and second connection portion 16B are positioned between first opening 600A, second opening 600B, and fuel manifold hole 12. First connection portion 16A is positioned in holes 11A, and seals a space between second frame body 6B and MEA 5, and second connection portion 16B seals a space between first frame body 6A and second frame body 6B. Accordingly, as illustrated in FIG. 6, third frame body 6C has a shape skipping a seal line of gasket 7C. FIG. 14 illustrates a state of this member. Note that each of holes 11H is an example of a through-hole, and when a resin flows into holes 11H as described below, third frame body 6C is formed.

Next, a method of manufacturing assembly 1 of this embodiment will be described with reference to FIG. 4 to FIG. 6.

First, as illustrated in FIG. 4 or FIG. 5, catalyst layer 5B is formed on both surfaces of the central portion of membrane 5A. At this time, the peripheral edge portion of membrane 5A is not covered with catalyst layer 5B and is exposed.

Specifically, for example, catalyst layer 5B is formed as described below. Platinum is supported by Ketjen black EC (furnace black manufactured by KETJENBLACK INTERNATIONAL CORPORATION, a specific surface area: 800 m²/g, a DPB oiling quantity: 360 ml/100 g) thereon in a weight ratio of 1:1. Next, 35 g of water and 59 g of an alcohol dispersion solution of a hydrogen ion conductive polymer electrolyte (manufactured by Asahi Glass Co., Ltd, 9% FSS) are mixed in 10 g of catalyst powder, and these are dispersed by using an ultrasonic stirrer to prepare a catalyst layer ink.

The catalyst layer ink is spray-coated on both of the surfaces of membrane 5A in a thickness of 20 µm, and then, a heat treatment is performed at 115°C for 20 minutes. In this manner, catalyst layer 5B is formed. Meanwhile, during the spray coating, membrane 5A is covered with a mask having an opening of 120 mm x 120 mm. As membrane 5A, a perfluorocarbon sulfonic acid film (DUPONT Nafion117 (registered trademark)) having outer dimensions of 140 mm square and a thickness of 30 µm is used. In the drawing, a structure for placement of membrane 5A on step portion 6D of first frame body 6A with accuracy and a structure for temporary fixing thereof are omitted.

Next, diffusion layer 5C is formed so as to cover the entire surface of catalyst layer 5B formed as described above. At this time, diffusion layer 5C is formed to slightly further outwardly protrude from the peripheral edge of catalyst layer 5B so as to cover the entire surface including the peripheral edge of catalyst layer 5B.

Diffusion layer 5C is formed as a porous body having a plurality of fine holes. When each of the fuel gas and the oxidizing gas enters into the holes, each of the gases diffuses and tends to reach catalyst layer 5B. In this embodiment, for example, both of the surfaces of membrane 5A, on which catalyst layer 5B is provided, are covered with carbon fiber fabric (Carbel CL400 manufactured by Gore-Tex Co., Ltd., thickness: 400 µm) of 123 mm square. In addition, the carbon fiber fabric is subjected to hot pressing under conditions of a pressure of 0.5 MPa at 135°C for 5 minutes to form diffusion layer 5C on catalyst layer 5B on both of the surfaces of membrane 5A.

As described above, first frame body 6A is formed in advance by injection-molding a thermoplastic resin material. As illustrated in FIG. 6, first frame body 6A is provided with first opening 600Ato. First opening 600A corresponds to a power generation portion where catalyst layer 5B of MEA 5 is provided. In addition, second frame body 6B is formed in advance through injection molding. As illustrated in FIG. 6, second frame body 6B is provided with second opening 600B. Second opening 600B also corresponds to the power generation portion of MEA 5.

As described above, MEA 5, first frame body 6A and second frame body 6B are prepared in advance. Then, the peripheral edge portion of MEA 5 is disposed on step portion 6D of first frame body 6A. At this time, the outermost edge of MEA 5 is disposed on an outer side in comparison to the gasket line and rib 8B. In this state, first frame body 6A and MEA 5 may be temporarily fixed.

Next, second frame body 6B is fitted to first frame body 6A on which MEA 5 is disposed. First frame body 6A and second frame body 6B hold MEA 5 so as to sandwich the peripheral edge portion therebetween, and thus as illustrated in FIG. 9, MEA 5 enters a non-movement state. In this state, only assembling may be performed or integration may be performed.

Then, an intermediate body illustrated in FIG. 9 is put into a mold for forming third frame body 6C, and a shape of third frame body 6C is obtained through injection molding. In this manner, assembly 1 is completed. The mold has an inner shape so as to obtain the shape of third frame body 6C in combination with the shape illustrated in FIG. 9. Assembly 1 is inserted between separators 2 and 3 through gasket 7, whereby cell 10 is completed.

### (Second Embodiment)

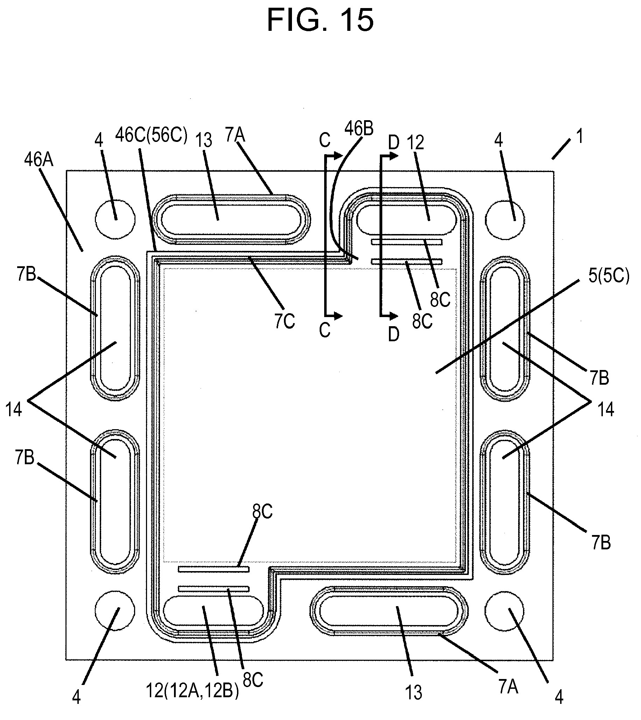

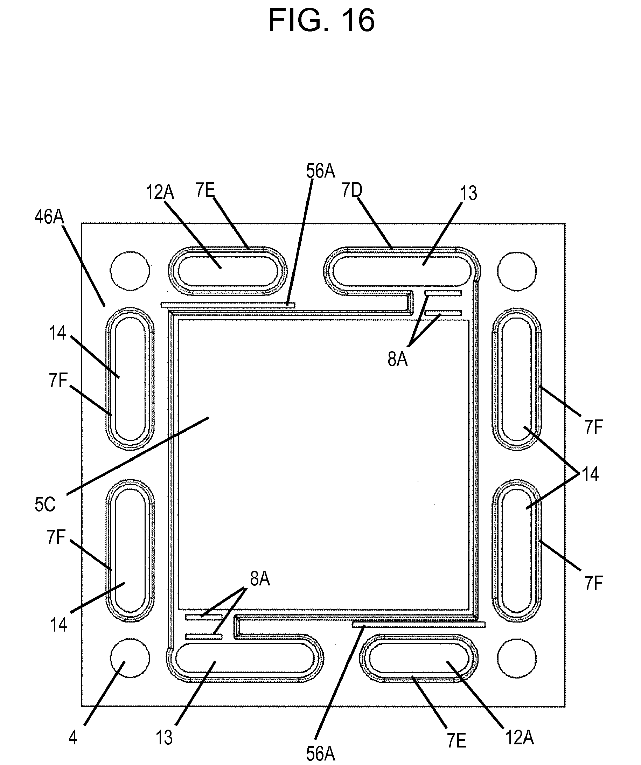

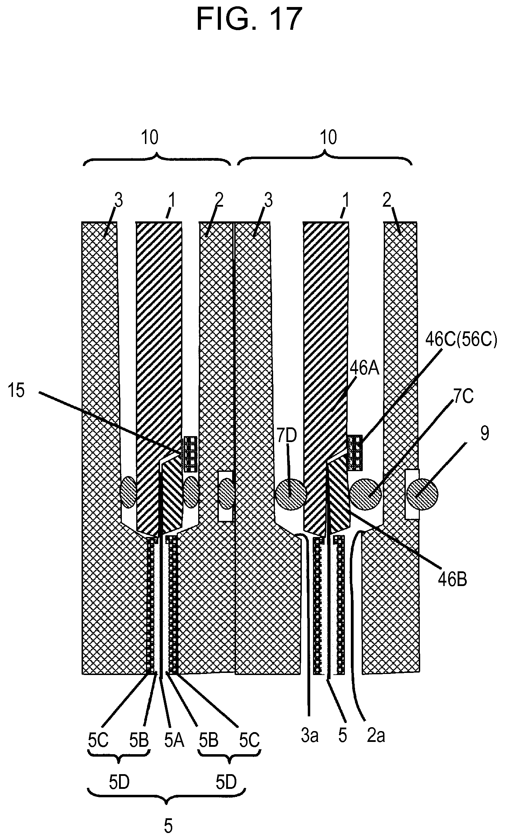

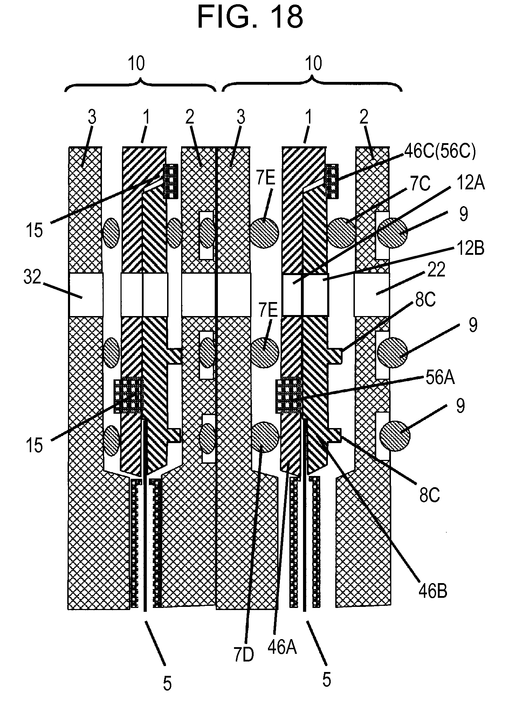

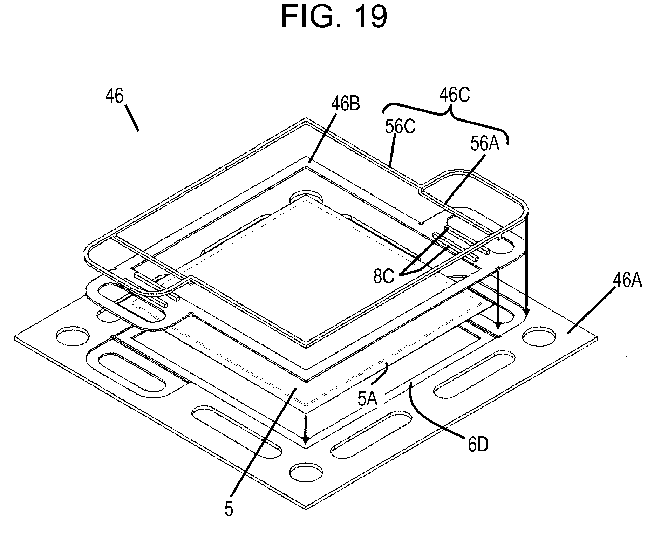

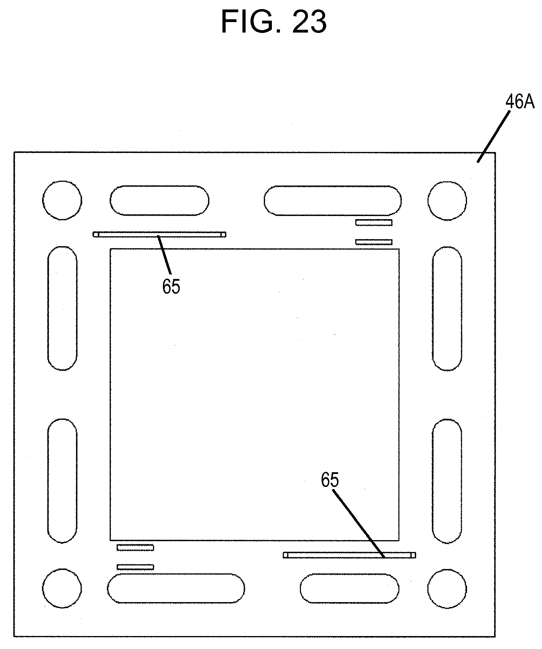

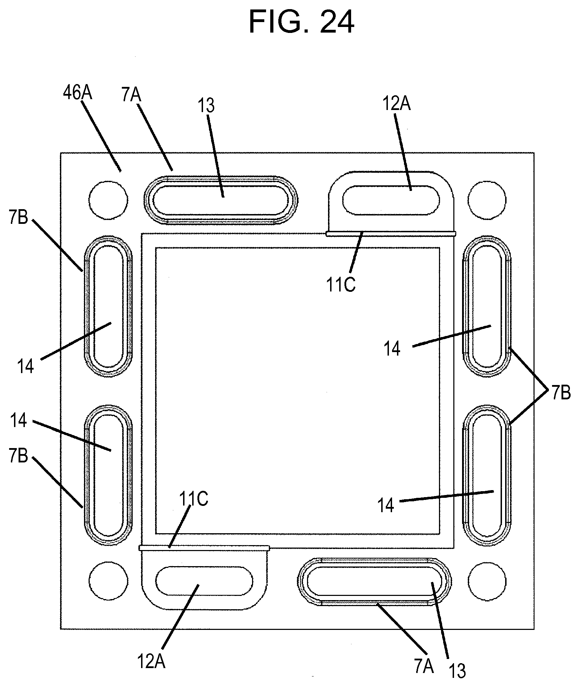

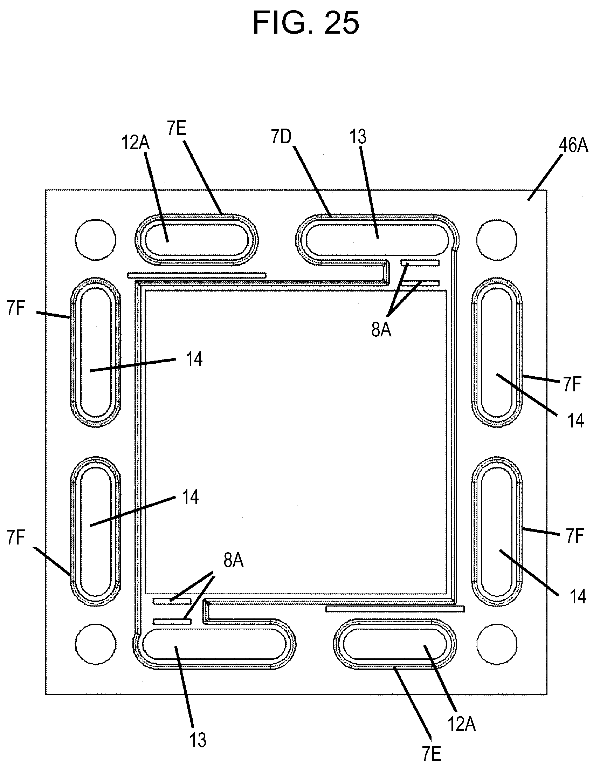

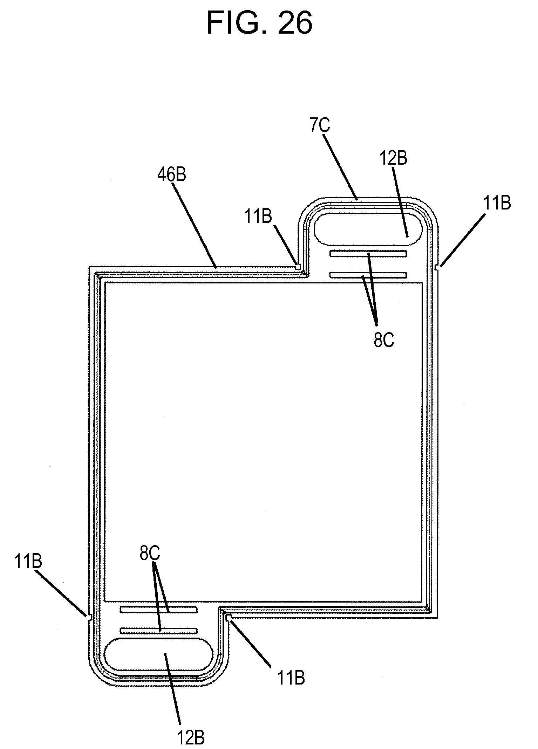

FIG. 15 and FIG. 16 are schematic front views of assembly 1 which are seen from anode separator (hereinafter, referred to as a separator) 2, and cathode separator (hereinafter, referred to as a separator) 3, respectively. FIG. 15 and FIG. 16 correspond to FIG. 2 and FIG. 3 in the first embodiment, respectively. Similarly, FIG. 17 to FIG. 27 corresponds to FIG. 4 to FIG. 14, respectively. That is, FIG. 17 is a cross-sectional view taken along arrow line C-C in FIG. 15, and FIG. 18 is a cross-sectional view taken along arrow line D-D in FIG. 15. FIG. 19 is an exploded perspective view of assembly 1 from which gaskets are eliminated.

As illustrated in FIG. 19, assembly 1 of this embodiment includes frame body 46 instead of frame body 6 in the first embodiment. The other configurations are the same as in the first embodiment. Hereinafter, the same reference numerals are given to the same constituent elements in the first embodiment, and description thereof may be omitted.

As illustrated in FIG. 17, FIG. 18, and FIG. 19, frame body 46 is constituted by first frame body 46A, second frame body 46B, and third frame body 46C.

Specifically, a peripheral edge portion of membrane 5A, which is disposed to be exposed at a peripheral edge portion of MEA 5, is disposed between first frame body 46A and second frame body 46B. In addition, this portion is sandwiched between first frame body 46A and second frame body 46B, and thus MEA 5 is held by frame body 6. This configuration is the same as that in the first embodiment.

Moreover, third frame body 46C is formed to integrate first frame body 46A and second frame body 46B. As illustrated in FIG. 17 and FIG. 18, third frame body 46C is welded at welding portion 15 to stride over a joint that is formed when first frame body 46A and second frame body 46B are fitted to each other. First frame body 46A, second frame body 46B, and third frame body 46C are mechanically integrated with each other, and thus membrane 5A is held. This configuration is basically the same as that in the first embodiment.

Hereinafter, description will be given of a difference between frame body 46 of this embodiment with respect to frame body 6 of the first embodiment with focus given to fuel gas manifold hole (hereinafter, referred to as a manifold hole) 12 and the vicinity thereof.

As illustrated in FIG. 18, second frame body 46B is provided with two ribs 8C for receiving reaction forces of gaskets 7D, 7E, and 7F, which are disposed between separator 3 and assembly 1, on a surface that faces separator 2. Ribs 8C prevent first frame body 46A and second frame body 46B from being deformed. As a result, it is possible to prevent the fuel gas from leaking toward a cathode surface side along a surface of MEA 5.

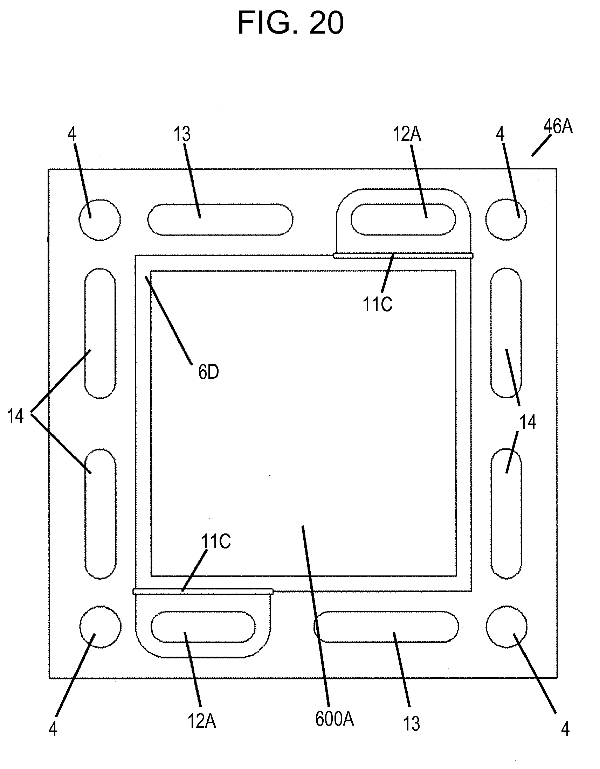

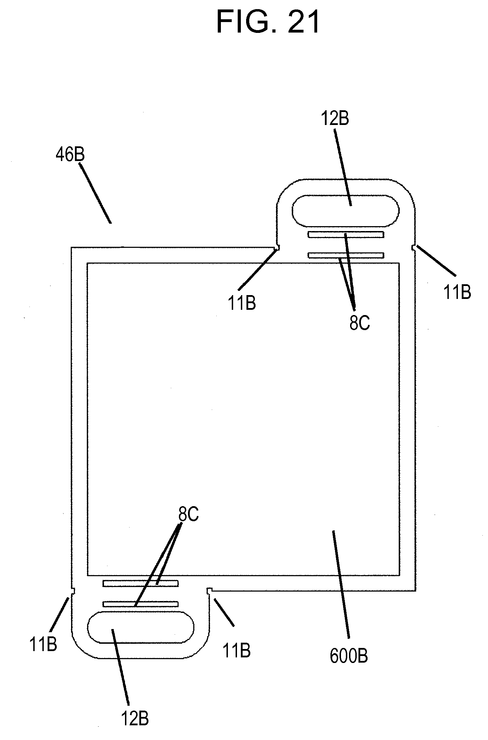

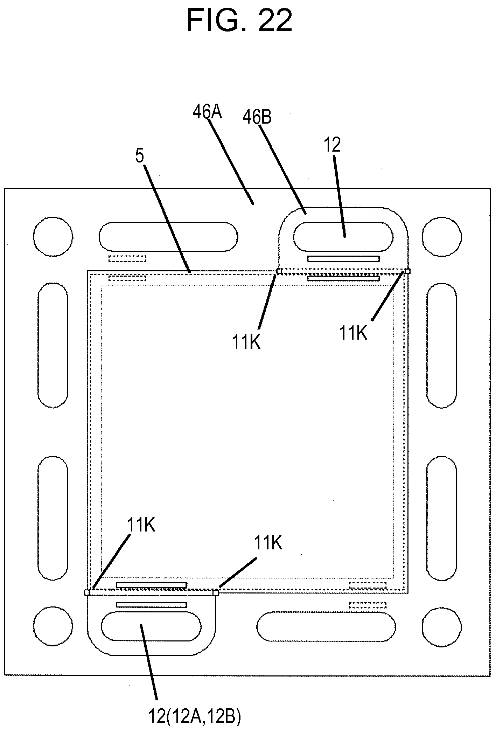

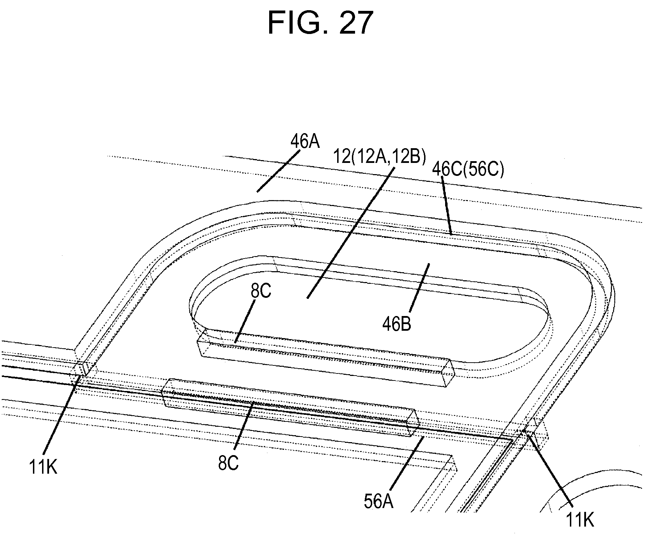

As illustrated in FIG. 18 and FIG. 19, third frame body 46C includes frame portion 56C that is the outermost periphery, and connection portion 56A. As illustrated in FIG. 20, first frame body 46A is provided with two holes 11C. On the other hand, as illustrated in FIG. 21, second frame body 46B is provided with four recesses 11B. As illustrated in FIG. 22, four holes 11K are formed in combination of recesses 11B and holes 11C. Connection portion 56A is positioned between first opening 600A, second opening 600B, and fuel manifold hole 12, passes through the four holes, and connects two sites of frame portion 56C. Connection portion 56A is positioned in holes 11C, and seals a space between second frame body 46B and MEA 5. Accordingly, as illustrated in FIG. 19, third frame body 46C has a shape skipping a seal line of gasket 7C. FIG. 27 illustrates a state of these members. Meanwhile, each of holes 11C is an example of a through-hole of the invention.

As described above, in a method of manufacturing assembly 1 according to each of the first embodiment and the second embodiment, first frame body 6A or 46A, and second frame body 6B or 46B can be molded with a mold regardless of MEA 5. In addition, third frame body 6C or 46C, and MEA 5 do not come into contact with each other even when injection-molding third frame body 6C or 46C. Accordingly, it is possible to prevent MEA 5 from being thermally damaged.

In addition, even when a molding defect occurs during molding of first frame body 6A or 46A, and second frame body 6B or 46B, MEA 5 does not become wasted. In addition, in assembly 1, even when failure is found in frame body 6 or 46, it is possible to detach MEA 5 by disassembling frame body 6 or 46. Accordingly, MEA 5 does not become wasted. Accordingly, it is possible to manufacture assembly 1, which is advantageous in reliable sealing properties, formation of manifolds, and the like, with a high yield ratio.

Meanwhile, in the first and second embodiments, the oxidizing gas may be allowed to pass through manifold hole 12, and the fuel gas may be allowed to pass through manifold hole 13 after substituting the anode catalyst and the cathode catalyst with each other and substituting separator 2 and separator 3 with each other. That is, separators 2 and 3 are first and second separators between which assembly 1 is sandwiched. Each of first gas manifold holes 12A which is provided in first frame body 6A or 46A and constitutes manifold hole 12, is a first gas manifold hole through which either the oxidizing gas or the fuel gas is supplied or discharged. On the other hand, each of manifold holes 13 is a second gas manifold hole through which a gas different from the gas supplied and discharged through the first gas manifold holes between the oxidizing gas and the fuel gas is supplied or discharged. In addition, each of third gas manifold holes 12B is a third gas manifold hole which is provided in second frame body 6B or 46B and communicates with one of the first gas manifold holes.

As described above, PEFC 100 according to each of the first and second embodiments includes cell 10 that is a single cell module, and cell 10 includes assembly 1, separators 2 and 3 as first and second separators, and gaskets 7C and 7D. Assembly 1 includes membrane 5A, electrode layer 5D, and frame body 6 or frame body 46. Membrane 5A has a first surface and a second surface opposite to the first surface. Electrode layer 5D is an electrode portion that includes an anode electrode bonded to the first surface of membrane 5A and a cathode electrode bonded to the second surface of membrane 5A. Frame body 6 or 46 is disposed at the peripheral edge portion of membrane 5A to hold electrode layer 5D. Frame body 6 is constituted by first frame body 6A, second frame body 6B, and third frame body 6C, and frame body 46 is constituted by first frame body 46A, second frame body 46B, and third frame body 46C. First frame body 6A or 46A is disposed at the peripheral edge portion of membrane 5A to expose electrode layer 5D and is provided with first opening 600A. Second frame body 6B or 46B is provided on a surface opposite to a surface of membrane 5A with which first frame body 6A or 46B is in contact. Second frame body 6B or 46B is provided with second opening 600B which communicates with first opening 600A and exposes electrode layer 5D, and sandwiches membrane 5A together with first frame body 6A or 46A therebetween. Third frame bodies 6C and 46C are provided to seal the boundary surface between first frame body 6A and second frame body 6B, and the boundary surface between first frame body 46A and second frame body 46B, respectively. Gasket 7D is disposed on a surface of first frame body 6A or 46A which faces separator 3 and surrounds first opening 600A. Gasket 7C is disposed on a surface of second frame body 6B or 46B which faces separator 2 and is positioned between frame portion 16C or 56C which is the outermost part of third frame body 6C or 46C, and second opening 600B of second frame body 6B or 46B. In addition, a portion of first frame body 6A or 46A which is in contact with gasket 7D, and a portion of second frame body 6B or 46B which is in contact with gasket 7C are formed of a plane without a joint or a step difference.

That is, in the above-described configuration, membrane 5A is sandwiched between first frame body 6A or 46A and second frame body 6B or 46B which do not have a joint or a step difference on a seal line and are prepared in advance. In addition, gasket 7C or 7D which is an elastic body is not disposed between frame body 6 or 46 and membrane 5A. Furthermore, third frame body 6C or 46C is welded to a portion out of membrane 5A without directly performing injection molding with respect to membrane 5A. Accordingly, assembly 1 is excellent in sealing properties.

It is preferable that first frame body 6A or 46A is provided with manifold holes 13 and 12A, and water manifold holes 14, and second frame body 6B or 46B is provided with third gas manifold holes 12B. Each of manifold holes 13 is provided on an outer side of gasket 7D, and supplies or discharges either an oxidizing gas or a fuel gas. Each of first gas manifold holes 12A is provided on an inner side of gasket 7D, and supplies or discharges a gas different from the gas supplied and discharged through one of manifold holes 13. Each of water manifold holes 14 is also provided on an outer side of gasket 7D. Each of third gas manifold holes 12B communicates with one of first gas manifold holes 12A on an inner side of gasket 7C. In this case, cell 10 further includes gaskets 7A, 7B, 7E, and 7F. On a surface of first frame body 6A or 46A which faces separator 2, each of gaskets 7A is disposed at the periphery of one of manifold holes 13, and each of gaskets 7B is disposed at the periphery of one of water manifold holes 14. On a surface of first frame body 6A or 46A which faces separator 3, each of gaskets 7E is disposed at the periphery of one of first gas manifold holes 12A, and each of gaskets 7F is disposed at the periphery of one of water manifold holes 14. In addition, a portion of first frame body 6A or 46A, which is in contact with gaskets 7A, 7B, 7E, and 7F, is formed in a plane without a joint or a step difference. According to this configuration, a possibility of leakage of the fuel gas, the oxidizing gas, and the water from respective manifolds is significantly reduced.

In addition, first frame body 6A is provided with holes 11A that are first through-holes between first gas manifold hole 12A and first opening 600A of. On the other hand, second frame body 6B is provided with recesses 11B at a portion which communicates with holes 11A, respectively. It is preferable that holes 11A and recesses 11B are overlapped with each other, and first connection portion 16A and second connection portion 16B which are parts of third frame body 6C are inserted into holes 11A and recesses 11B.

Alternatively, first frame body 46A is provided with holes 11C that are first through-holes between each of first gas manifold holes 12A and first opening 600A. On the other hand, second frame body 46B is provided with recesses 11B at a portion which communicates with holes 11C, respectively. It is preferable that holes 11C and recesses 11B are overlapped with each other, and connection portion 56A that is a part of third frame body 46C is inserted into holes 11C and recesses 11B.

According to this configuration, third frame body 6C or 46C is welded to a portion outside membrane 5A while skipping a seal line. Accordingly, sealing properties of assembly 1 are further excellent.

In addition, it is preferable that first frame bodies 6A and 46A are made of a resin material. According to this, it is possible to secure insulating properties.

As described above, each pair of first frame body 6A and second frame body 6B and first frame body 46A and second frame body 6B or 46B is bonded on a portion outside membrane 5A through welding of third frame body 6C or 46C without contact between third frame body 6C or 46C and membrane 5A while skipping a contact area with gasket 7D and a contact area with gasket 7C. Third frame bodies 6C and 46C may be formed by casting and curing a non-cured resin such as an epoxy resin instead of casting of a melted resin.

In addition, when arbitrary specific structures or manufacturing methods of the first and second embodiments are appropriately combined, it is possible to accomplish both effects thereof.

Preferred embodiments of the invention have been sufficiently described with reference to the accompanying drawings, it should be understood by those skilled in the art that various modifications or changes may be made. It should be understood that such modifications or changes are included in the invention without departing from a range of the invention in accordance with claims.

### INDUSTRIAL APPLICABILITY

According to the invention, in an assembled state of a solid polymer electrolyte fuel cell, it is possible to block flows of a fuel gas and an oxidizing gas at the peripheral edge of an MEA, and thus it is possible to further raise usage efficiency of the fuel gas and the oxidizing gas. In addition, it is possible to raise a yield ratio during manufacturing. Accordingly, the invention is useful as a fuel cell that is used in a cogeneration system, an electric vehicle, or the like.

### REFERENCE MARKS IN THE DRAWINGS

- 1:: Electrode-membrane-frame assembly (assembly)
- 2:: Anode separator (separator)
- 3:: Cathode separator (separator)
- 4:: Bolt hole
- 5:: MEA (membrane-electrode assembly)
- 5A:: Polymer electrolyte membrane
- 5B:: Catalyst layer
- 5C:: Diffusion layer
- 5D:: Electrode layer
- 6, 46:: Frame body
- 6A, 46A:: First frame body
- 6B, 46B:: Second frame body
- 6C, 46C:: Third frame body
- 7^{:}: Gasket
- 7A:: First gasket (gasket)
- 7B:: Second gasket (gasket)
- 7C:: Second opening gasket (gasket)
- 7D:: First opening gasket (gasket)
- 7E:: Third gasket (gasket)
- 7F:: Fourth gasket (gasket)
- 8A, 8B, 8C:: Rib
- 9:: Sealing member
- 10:: Cell
- 11A, 11C, 11H, 11K:: Hole
- 11B:: Recess
- 12, 22, 32:: Fuel gas manifold hole (manifold hole)
- 12A:: First gas manifold hole
- 12B:: Third gas manifold hole
- 13:: Oxidizing gas manifold hole (second gas manifold hole, manifold hole)
- 14, 24, 34:: Water manifold hole
- 15:: Welding portion
- 16A:: First connection portion
- 16B:: Second connection portion
- 16C, 56C:: Frame portion
- 21:: Fuel gas flow passage groove (groove)
- 21A, 31A:: Diffusion layer contact portion
- 23, 33:: Oxidizing gas manifold hole (manifold hole)
- 31:: Oxidizing gas flow passage groove (groove)
- 56A:: Connection portion
- 100:: Solid polymer electrolyte fuel cell (PEFC)
- 600A:: First opening
- 600B:: Second opening

## Claims

1. A solid polymer electrolyte fuel cell comprising:
a single cell module including:
an electrode-membrane-frame assembly (1) including:
a polymer electrolyte membrane (5A) having a first surface and a second surface opposite to the first surface;
an electrode portion (5D) including an anode electrode bonded to the first surface, and a cathode electrode bonded to the second surface; and
a frame body (6, 46) disposed at a peripheral edge portion of the polymer electrolyte membrane (5A), holding the electrode portion (5D), and including:
a first frame body (6A, 46A) disposed at a peripheral edge portion of the polymer electrolyte membrane (5A), and provided with a first opening (600A) from which the electrode portion is exposed;
a second frame body (6B, 46B) disposed on a surface opposite to a surface of the polymer electrolyte membrane (5A) with which the first frame body (6A, 46A) is in contact, provided with a second opening (600B) which communicates with the first opening (600A) and the electrode portion being exposed from the second opening (600B), and sandwiches the polymer electrolyte membrane (5A) together with the first frame body (6A, 46A); and
a third frame body (6C, 46C) disposed without contact with the polymer electrolyte membrane (5A) and sealing a boundary surface between the first frame body (6A, 46A) and the second frame body (6B, 46B) out of the polymer electrolyte membrane (5A),
first and second separators (2, 3) between which the electrode-membrane-frame assembly (1) is sandwiched;
a first opening gasket (7D) disposed on a surface of the first frame body (6A, 46A) which faces the second separator (3), and surrounding the first opening (600A); and
a second opening gasket (7C) disposed on a surface of the second frame body (6B, 46B) which faces the first separator (2), and at a position between an outermost periphery of the third frame body (6C, 46C) and the second opening (600B) of the second frame body,
wherein the first frame body (6A, 46A) has a portion in contact with the first opening gasket (7D) and forming a plane free from a joint or a step difference, and the second frame body (6B, 46B) has a portion in contact with the second opening gasket (7C) and forming a plane free from a joint or a step difference.

2. The solid polymer electrolyte fuel cell of Claim 1,
wherein the first frame body (6B, 46B) is provided with a first gas manifold hole (12A) configured to supply or discharge one of an oxidizing gas and a fuel gas, and a water manifold hole (14, 24, 34) configured to supply or discharge water, both out of the first opening gasket (7D), and a second gas manifold hole (13) configured to supply or discharge a gas different from one of the gasses supplied or discharged through the first gas manifold hole (12A) in the first opening gasket (7D),
the second frame body (6B, 46B) is provided with a third gas manifold hole (12B) communicating with the first gas manifold hole (12A) in the second opening gasket (7C), and
the single cell module further includes,
a first gasket (7A) disposed at a periphery of the second gas manifold hole (13), and a second gasket (7B) disposed at a periphery of the water manifold hole (14, 24, 34), both on the surface of the first frame body (6, 46) which faces the first separator (2), and
a third gasket (7E) disposed at a periphery of the first gas manifold hole (12A), and a fourth gasket (7F) disposed at the periphery of the water manifold hole (14, 24, 34), both on the surface of the first frame body (6A, 46A) which faces the second separator (3), and
in the first frame body (6A, 46A), each of a portion in contact with the first gasket (7A), a portion in contact with the second gasket (7B), a portion in contact with the third gasket (7E), and a portion in contact with the fourth gasket (7F) forms a plane free from a joint or a step difference.

3. The solid polymer electrolyte fuel cell according to claim 2,
wherein the first frame body (6A, 46A) is provided with a first through-hole between the first gas manifold hole (12A) and the first opening (600A), the second frame body (6B, 46B) is provided with a recess (11B) at a portion communicating with the first through-hole, and a part of the third frame body (6C, 46C) is inserted into the first through-hole and the recess.

4. The solid polymer electrolyte fuel cell according to any one of claims 1 to 3, wherein the first frame body (6A, 46A) is made of a resin.

5. The solid polymer electrolyte fuel cell according to any one of claims 1 to 4, wherein the first frame body (6A, 46A) are bonded to the second frame body (6B, 46B) out of the polymer electrolyte membrane (5A) by the third frame body (6C, 46C) while skipping a contact area with the first opening gasket (7D) and a contact area with the second opening gasket (7C).

## Patentansprüche

1. Festpolymerelektrolyt-Brennstoffzelle, aufweisend:
ein Einzelzell-Modul, umfassend:
eine Elektroden-Membran-Rahmen-Anordnung (1), umfassend:
eine Polymer-Elektrolyt-Membran (5A), aufweisend eine erste Oberfläche und eine zweite Oberfläche gegenüber der ersten Oberfläche;
einen Elektroden-Bereich (5D) mit einer Anoden-Elektrode, die mit der ersten Oberfläche verbunden ist, und einer Kathoden-Elektrode, die mit der zweiten Oberfläche verbunden ist; und
einen Rahmenkörper (6, 46), der an einem Umfangsrandabschnitt der Polymerelektrolytmembran (5A) angeordnet ist und den Elektroden-Bereich (5D) hält, und der Folgendes umfasst:
einen ersten Rahmenkörper (6A, 46A), der an einem Umfangsrandabschnitt der Polymerelektrolytmembran (5A) angeordnet ist und mit einer ersten Öffnung (600A) bereitgestellt ist, von der der Elektroden-Bereich freigelegt ist;
einen zweiten Rahmenkörper (6B, 46B), der angeordnet ist auf einer Oberfläche gegenüber einer Oberfläche der Polymerelektrolytmembran (5A), mit der der erste Rahmenkörper (6A, 46A) in Kontakt ist, bereitgestellt mit einer zweiten Öffnung (600B), die mit der ersten Öffnung (600A) kommuniziert, und wobei der Elektroden-Bereich von der zweiten Öffnung (600B) freigelegt ist, wobei die Polymerelektrolytmembran (5A) zusammen mit dem ersten Rahmenkörper (6A, 46A) sandwichartig angeordnet sind; und
einen dritten Rahmenkörper (6C, 46C), der ohne Kontakt mit der Polymerelektrolytmembran (5A) angeordnet ist und eine Grenzfläche zwischen dem ersten Rahmenkörper (6A, 46A) und dem zweiten Rahmenkörper (6B, 46B) außerhalb der der Polymerelektrolytmembran (5A) abdichtet,
erste und zweite Separatoren (2, 3), zwischen denen die Elektroden-Membran-Rahmen-Anordnung (1) sandwichartig angeordnet ist:
eine erste Öffnungsdichtung (7D), die auf einer Oberfläche des ersten Rahmenkörpers (6A, 46A) angeordnet ist, der zum zweiten Separator (3) gerichtet ist, und die die erste Öffnung (600A) umgibt; und
eine zweite Öffnungsdichtung (7C), die auf einer Oberfläche des zweiten Rahmenkörpers (6B, 46B) angeordnet ist, der zum ersten Separator (2) gerichtet ist, und in einer Position zwischen einem äußersten Umfang des dritten Rahmenkörpers (6C, 46C) und der zweiten Öffnung (600B) des zweiten Rahmenkörpers,
wobei der erste Rahmenkörper (6A, 46A) einen Bereich in Kontakt mit der ersten Öffnungsdichtung (7D) aufweist und eine Ebene bildet, die frei von einer Fuge oder einem Stufenunterschied ist, und der zweite Rahmenkörper (6B, 46B) einen Bereich in Kontakt mit der zweiten Öffnungsdichtung (7C) aufweist und eine Ebene bildet, die frei von einer Fuge oder einem Stufenunterschied ist.

2. Festpolymerelektrolyt-Brennstoffzelle nach Anspruch 1,
wobei der erste Rahmenkörper (6B, 46B) mit einer ersten Gasverteilerbohrung (12A) versehen ist, die konfiguriert ist für ein Zuführen oder Abtransportieren eines von einem Oxidationsgas und einem Brenngas, und einer Wasserverteilerbohrung (14, 24, 34), die konfiguriert ist für ein Zuführen oder Abtransportieren von Wasser, beide aus der ersten Öffnungsdichtung (7D), und mit einer zweiten Gasverteilerbohrung (13), die konfiguriert ist für ein Zuführen oder Abtransportieren eines Gases, das sich von einem der durch die erste Gasverteilerbohrung (12A) in der ersten Öffnungsdichtung (7D) zugeführten oder abtransportierten Gase unterscheidet,
wobei der zweite Rahmenkörper (6B, 46B) mit einer dritten Gasverteilerbohrung (12B) versehen ist, die mit der ersten Gasverteilerbohrung (12A) in der zweiten Öffnungsdichtung (7C) kommuniziert, und
das Einzelzell-Modul ferner Folgendes aufweist,
eine erste Dichtung (7A), angeordnet an einem Umkreis der zweiten Gasverteilerbohrung (13), und eine zweite Dichtung (7B), angeordnet an einem Umkreis der Wasserverteilerbohrung (14, 24, 34), beide auf der Oberfläche des ersten Rahmenkörpers (6, 46), der gegen den ersten Separator (2) gerichtet ist, und
eine dritte Dichtung (7E), angeordnet an einem Umkreis der ersten Gasverteilerbohrung (12A), und eine vierte Dichtung (7F), angeordnet an einem Umkreis der Wasserverteilerbohrung (14, 24, 34), beide auf der Oberfläche des ersten Rahmenkörpers (6A, 46A), der gegen den zweiten Separator (3) gerichtet ist, und
wobei im ersten Rahmenkörper (6A, 46A) jeder eines Bereichs in Kontakt mit der ersten Dichtung (7A), eines Bereichs in Kontakt mit der zweiten Dichtung (7B), eines Bereichs in Kontakt mit der dritten Dichtung (7E) und eines Bereichs in Kontakt mit der vierten Dichtung (7F) eine Ebene bildet, die frei von einer Fuge oder einem Stufenunterschied ist.

3. Festpolymerelektrolyt-Brennstoffzelle nach Anspruch 2,
wobei der erste Rahmenkörper (6A, 46A) mit einem ersten Durchgangsloch zwischen der ersten Gasverteilerbohrung (12A) und der ersten Öffnung (600A), der zweite Rahmenkörper (6B, 46B) mit einem ausgesparten Bereich (11B) an einem mit dem ersten Durchgangsloch kommunizierenden Bereich versehen ist, und ein Teil des dritten Rahmenkörpers (6C, 46AC) in das erste Durchgangsloch und den ausgesparten Bereich eingesetzt ist.

4. Festpolymerelektrolyt-Brennstoffzelle nach einem der Ansprüche 1 bis 3,
wobei der erste Rahmenkörper (6A, 46A) aus einem Harz hergestellt ist.

5. Festpolymerelektrolyt-Brennstoffzelle nach einem der Ansprüche 1 bis 4,
wobei der erste Rahmenkörper (6A, 46A) mit dem zweiten Rahmenkörper (6B, 46B) außerhalb der Polymerelektrolytmembran (5A) durch den dritten Rahmenkörper (6C, 46C) verbunden ist, während eine Kontaktfläche mit der ersten Öffnungsdichtung (7D) und eine Kontaktfläche mit der zweiten Öffnungsdichtung (7C) übersprungen wird.

## Revendications

1. Pile à combustible à électrolyte solide à base de polymère comprenant :
un module de pile unique comprenant :
un ensemble de bâti de membrane d'électrode (1) comprenant :
une membrane d'électrolyte à base de polymère (5A) ayant une première surface et une seconde surface opposée à la première surface;
une partie d'électrode (5D) comprenant une électrode d'anode reliée à la première surface et une électrode de cathode reliée à la seconde surface ; et
un corps de bâti (6, 46) disposé au niveau d'une partie de bord périphérique de la membrane d'électrolyte à base de polymère (5A), maintenant la partie d'électrode (5D) et comprenant :
un premier corps de bâti (6A, 46A) disposé au niveau d'une partie de bord périphérique de la membrane d'électrolyte à base de polymère (5A), et prévu avec une première ouverture (600A) à partir de laquelle la partie d'électrode est exposée ;
un deuxième corps de bâti (6B, 46B) disposé sur une surface opposée à une surface de la membrane d'électrolyte à base de polymère (5A) avec laquelle le premier corps de bâti (6A, 46A) est en contact, prévu avec une seconde ouverture (600B) qui communique avec la première ouverture (600A) et la partie d'électrode étant exposée à partir de la seconde ouverture (600B) et prend en sandwich la membrane d'électrolyte à base de polymère (5A) conjointement avec le premier corps de bâti (6A, 46A) ; et
un troisième corps de bâti (6C, 46C) disposé sans contact avec la membrane d'électrolyte à base de polymère (5A) et scellant une surface de limite entre le premier corps de bâti (6A, 46A) et le deuxième corps de bâti (6B, 46B) hors de la membrane d'électrolyte à base de polymère (5A),
des premier et second séparateurs (2, 3) entre lesquels l'ensemble de bâti de membrane d'électrode (1) est pris en sandwich ;
un premier joint d'ouverture (7D) disposé sur une surface du premier corps de bâti (6A, 46A) qui fait face au second séparateur (3), et entourant la première ouverture (600A) ; et
un second joint d'ouverture (7C) disposé sur une surface du deuxième corps de bâti (6B, 46B) qui fait face au premier séparateur (2) et dans une position entre la périphérie située le plus à l'extérieur du troisième corps de bâti (6C, 46C) et la seconde ouverture (600B) du deuxième corps de bâti,
dans laquelle le premier corps de bâti (6A, 46A) a une partie en contact avec le premier joint d'ouverture (7D) et formant un plan dépourvu de joint ou de différence d'échelon, et le deuxième corps de bâti (6B, 46B) a une partie en contact avec le second joint d'ouverture (7C) et formant un plan dépourvu de joint ou de différence d'échelon.

2. Pile à combustible à électrolyte solide à base de polymère selon la revendication 1,
dans laquelle le premier corps de bâti (6B, 46B) est prévu avec un premier trou de collecteur de gaz (12A) configuré pour fournir ou décharger l'un parmi un gaz oxydant ou un gaz combustible, et un trou de collecteur d'eau (14, 24, 34) configuré pour fournir ou décharger l'eau, à la fois hors du premier joint d'ouverture (7D) et d'un deuxième trou de collecteur de gaz (13) configuré pour fournir ou décharger un gaz différent de l'un des gaz fournis ou déchargés par le premier trou de collecteur de gaz (12A) dans le premier joint d'ouverture (7D),
le deuxième corps de bâti (6B, 46B) est prévu avec un troisième trou de collecteur de gaz (12B) communiquant avec le premier trou de collecteur de gaz (12A) dans le second joint d'ouverture (7C), et
le module de pile unique comprend en outre :
un premier joint (7A) disposé au niveau d'une périphérie du deuxième trou de collecteur de gaz (13) et un deuxième joint (7B) disposé au niveau d'une périphérie du trou de collecteur d'eau (14, 24, 34), à la fois sur la surface du premier corps de bâti (6, 46) qui fait face au premier séparateur (2), et
un troisième joint (7E) disposé au niveau d'une périphérie du premier trou de collecteur de gaz (12A) et un quatrième joint (7F) disposé au niveau de la périphérie du trou de collecteur d'eau (14, 24, 34), les deux sur la surface du premier corps de bâti (6A, 46A) qui fait face au second séparateur (3), et
dans le premier corps de bâti (6A, 46A), chacune parmi une partie en contact avec le premier joint (7A), une partie en contact avec le deuxième joint (7B), une partie en contact avec le troisième joint (7E), et une partie en contact avec le quatrième joint (7F), forme un plan dépourvu de joint ou de différence d'échelon.

3. Pile à combustible à électrolyte solide à base de polymère selon la revendication 2,
dans laquelle le premier corps de bâti (6A, 46A) est prévu avec un premier trou débouchant entre le premier trou de collecteur de gaz (12A) et la première ouverture (600A), le deuxième corps de bâti (6B, 46B) est prévu avec un évidement (11B) au niveau d'une partie communiquant avec le premier trou débouchant, et une partie du troisième corps de bâti (6C, 46C) est insérée dans le premier trou débouchant et l'évidement.

4. Pile à combustible à électrolyte solide à base de polymère selon l'une quelconque des revendications 1 à 3,
dans laquelle le premier corps de bâti (6A, 46A) est réalisé à partir de résine.

5. Pile à combustible à électrolyte solide à base de polymère selon l'une quelconque des revendications 1 à 4,
dans laquelle le premier corps de bâti (6A, 46A) est relié au deuxième corps de bâti (6B, 46B) hors de la membre d'électrolyte à base de polymère (5A) par le troisième corps de bâti (6C, 46C) tout en sautant une zone de contact avec le premier joint d'ouverture (7D) et une zone de contact avec le second joint d'ouverture (7C).
